# EUROPEAN PATENT APPLICATION

(11) **EP 4 832 520 A1**
(43) Date of publication of application: **28.10.2026**
(21) Application number: 24906276.1
(22) Date of filing: 16.12.2024
(51) Int. Cl.: H04W 4/70, H04W 72/04

(54) **COMMUNICATION METHOD AND APPARATUS, COMMUNICATION DEVICES, AND READABLE STORAGE MEDIUM**

(30) Priority: 22.12.2023 CN 202311784199
(71) Applicant: Vivo Mobile Communication Co., Ltd., Dongguan, Guangdong 523863 (CN)
(72) Inventor: KE, Xiaowan, Dongguan, Guangdong 523863 (CN)
(74) Representative: Lavoix
(86) International application number: PCT/CN2024/139449
(87) International publication number: WO 2025/130795

(57) **Abstract**

Embodiments of this application provide a communication method and apparatus, a communication device, and a readable storage medium, and pertain to the technical field of wireless communication. The communication method of the embodiments of this application includes: performing, by a first communication device, at least one of the following: authorizing and/or activating, by the first communication device, a second communication device to operate as at least one of the following devices: a reader/writer device, an intermediate device, a device communicating with an ambient Internet of things AIoT device, a device executing an AIoT task, an excitation source, and a carrier source; and obtaining, by the first communication device, first information; where the first information is used to indicate at least one of the following: the second communication device is authorized and/or activated to operate as at least one of the following devices: a reader/writer device, an intermediate device, a device communicating with an ambient Internet of things AIoT device, a device executing an AIoT task, an excitation source, and a carrier source.

## Description

### CROSS-REFERENCE TO RELATED APPLICATIONS

This application claims priority to Chinese Patent Application No. 202311784199.7 filed in China on December 22, 2023, the entire contents of which are incorporated herein by reference.

### TECHNICAL FIELD

This application pertains to the technical field of wireless communication, and specifically relates to a communication method and apparatus, a communication device, and a readable storage medium.

### BACKGROUND

Ambient Internet of things (Ambient Internet of Things, AIoT), also known as ambient power-enabled Internet of things (Ambient power-enabled Internet of Things, Ambient power-enabled IoT), is a type of IoT service. AIoT devices are low-power IoT devices, with overall low power consumption for this type of device, including low-power signal reception and low-power signal transmission. Due to the overall low power consumption, the communication energy can be sourced from the environment, such as wind energy, kinetic energy, thermal energy, or radio frequency RF signals. AIoT devices can also be described as passive (passive) IoT devices or responder devices.

In order to support the technology of ambient Internet of things (Ambient Internet of Things, AIoT), licensed (licensed) spectrum needs to be used. For example, a terminal (User Equipment, UE), integrated access backhaul (Integrated Access Backhaul, IAB), a relay (relay), or the like operating as a reader/writer or an intermediate device for a reader/writer needs to use a licensed spectrum of an operator to communicate with an AIoT device. A licensed spectrum is typically configured and controlled by a radio access network (Radio Access Network, RAN). However, in the current related art, on the one hand, an access network device does not know which device will communicate with an AIoT device, and on the other hand, a reader/writer or an intermediate device for a reader/writer does not know where to obtain a radio resource configuration. As a result, communication with an AIoT device cannot be supported. Therefore, how to support communication with an AIoT device is an urgent problem to be solved.

### SUMMARY

Embodiments of this application provide a communication method and apparatus, a communication device, and a readable storage medium, which can solve the related problems in the related art of how to support communication with AIoT devices.

According to a first aspect, a communication method is provided, which is executed by a first communication device. The method includes:
performing, by the first communication device, at least one of the following:
authorizing, by the first communication device, a second communication device to operate as at least one of the following devices: a reader/writer device, an intermediate device, a device communicating with an ambient Internet of things AIoT device, a device executing an AIoT task, an excitation source, and a carrier source;
activating, by the first communication device, the second communication device to operate as at least one of the following devices: a reader/writer device, an intermediate device, a device communicating with an AIoT device, a device executing an AIoT task, an excitation source, and a carrier source; and
obtaining, by the first communication device, first information; where
the first information is used to indicate at least one of the following:
   the second communication device is authorized to operate as at least one of the following devices: a reader/writer device, an intermediate device, a device communicating with an ambient Internet of things AIoT device, a device executing an AIoT task, an excitation source, and a carrier source; and
   the second communication device is activated to operate as at least one of the following devices: a reader/writer device, an intermediate device, a device communicating with an AIoT device, a device executing an AIoT task, an excitation source, and a carrier source.

According to a second aspect, a communication method is provided, which is executed by a third communication device. The method includes:
performing, by the third communication device, a second operation, where the second operation includes at least one of the following:
sending second information; and
receiving at least one of the following: first information, sixth information, first support information, second support information, and capability information of a first communication device; where
the second information includes at least one of the following:
   capability information of a second communication device, where the capability information of the second communication device is used to indicate that the second communication device supports operating as at least one of the following devices: a reader/writer device, an intermediate device, a device communicating with an AIoT device, a device executing an AIoT task, an excitation source, and a carrier source; and
   a first request, where the first request is used to request the second communication device to operate as at least one of the following devices: a reader/writer device, an intermediate device, a device communicating with an AIoT device, a device executing an AIoT task, an excitation source, and a carrier source; where
   the intermediate device includes at least one of the following: a device that relays or assists in communication between the first communication device and an AIoT device, a communication device between the first communication device and an AIoT device, a device that extends a coverage area of the first communication device, and a device that extends the coverage area of the first communication device;
   the first information is used to indicate at least one of the following:
      the second communication device is authorized to operate as at least one of the following devices: a reader/writer device, an intermediate device, a device communicating with an ambient Internet of things AIoT device, a device executing an AIoT task, an excitation source, and a carrier source; and
      the second communication device is activated to operate as at least one of the following devices: a reader/writer device, an intermediate device, a device communicating with an AIoT device, a device executing an AIoT task, an excitation source, and a carrier source;
      the sixth information is used to indicate at least one of the following: the second communication device is authorized or activated to operate as at least one of the following devices: a reader/writer device, an intermediate device, a device communicating with an ambient Internet of things AIoT device, a device executing an AIoT task, an excitation source, and a carrier source;
      the capability information of the first communication device is used to indicate at least one of the following: the first communication device supports operating as a reader/writer, the first communication device supports communicating with an AIoT device through an intermediate device, the first communication device supports providing radio resource control for a reader/writer or an intermediate device, and the first communication device supports providing radio resource control for AIoT communication;
      the first support information is used to indicate at least one of the following: an AIoT service is supported, the first communication device supports operating as a reader/writer, the first communication device supports communicating with an AIoT device through an intermediate device, intermediate device-based AIoT communication is supported, an operation of providing radio resource control for a reader/writer or an intermediate device is supported, and an operation of supporting providing radio resource control for AIoT communication is supported; and
      the second support information is used to indicate at least one of the following: an AIoT communication service is supported, and intermediate device-based AIoT communication is supported.

According to a third aspect, a communication method is provided, which is executed by a fourth communication device. The method includes:
performing, by the fourth communication device, a third operation, where the third operation includes at least one of the following:
authorizing or activating a second communication device to operate as at least one of the following devices: a reader/writer device, an intermediate device, a device communicating with an AIoT device, a device executing an AIoT task, an excitation source, and a carrier source; and
sending first information, where the first information is used to indicate at least one of the following:
   the second communication device is authorized to operate as at least one of the following devices: a reader/writer device, an intermediate device, a device communicating with an AIoT device, a device executing an AIoT task, an excitation source, and a carrier source; and
   the second communication device is activated to operate as at least one of the following devices: a reader/writer device, an intermediate device, a device communicating with an AIoT device, a device executing an AIoT task, an excitation source, and a carrier source.

According to a fourth aspect, a communication apparatus is provided, including:
a first execution module, configured to execute at least one of the following:
authorizing, by a first communication device, a second communication device to operate as at least one of the following devices: a reader/writer device, an intermediate device, a device communicating with an ambient Internet of things AIoT device, a device executing an AIoT task, an excitation source, and a carrier source;
activating, by the first communication device, the second communication device to operate as at least one of the following devices: a reader/writer device, an intermediate device, a device communicating with an AIoT device, a device executing an AIoT task, an excitation source, and a carrier source; and
obtaining, by the first communication device, first information; where
the first information is used to indicate at least one of the following:
   the second communication device is authorized to operate as at least one of the following devices: a reader/writer device, an intermediate device, a device communicating with an ambient Internet of things AIoT device, a device executing an AIoT task, an excitation source, and a carrier source; and
   the second communication device is activated to operate as at least one of the following devices: a reader/writer device, an intermediate device, a device communicating with an AIoT device, a device executing an AIoT task, an excitation source, and a carrier source.

According to a fifth aspect, a communication apparatus is provided, including:
a second execution module, configured to execute a second operation, where the second operation includes at least one of the following:
sending second information; and
receiving at least one of the following: first information, sixth information, first support information, second support information, and capability information of a first communication device; where
the second information includes at least one of the following:
   capability information of a second communication device, where the capability information of the second communication device is used to indicate that the second communication device supports operating as at least one of the following devices: a reader/writer device, an intermediate device, a device communicating with an AIoT device, a device executing an AIoT task, an excitation source, and a carrier source; and
   a first request, where the first request is used to request a second communication device to operate as at least one of the following devices: a reader/writer device, an intermediate device, a device communicating with an AIoT device, a device executing an AIoT task, an excitation source, and a carrier source;
   where the intermediate device includes at least one of the following: a device that relays or assists in communication between the first communication device and an AIoT device, a communication device between the first communication device and an AIoT device, a device that extends a coverage area of the first communication device, and a device that extends the coverage area of the first communication device;
   the first information is used to indicate at least one of the following:
      the second communication device is authorized to operate as at least one of the following devices: a reader/writer device, an intermediate device, a device communicating with an ambient Internet of things AIoT device, a device executing an AIoT task, an excitation source, and a carrier source; and
      the second communication device is activated to operate as at least one of the following devices: a reader/writer device, an intermediate device, a device communicating with an AIoT device, a device executing an AIoT task, an excitation source, and a carrier source;
      the sixth information is used to indicate at least one of the following: the second communication device is authorized or activated to operate as at least one of the following devices: a reader/writer device, an intermediate device, a device communicating with an ambient Internet of things AIoT device, a device executing an AIoT task, an excitation source, and a carrier source;
      the capability information of the first communication device is used to indicate at least one of the following: the first communication device supports operating as a reader/writer, the first communication device supports communicating with an AIoT device through an intermediate device, the first communication device supports providing radio resource control for a reader/writer or an intermediate device, and the first communication device supports providing radio resource control for AIoT communication;
      the first support information is used to indicate at least one of the following: an AIoT service is supported, the first communication device supports operating as a reader/writer, the first communication device supports communicating with an AIoT device through an intermediate device, intermediate device-based AIoT communication is supported, an operation of providing radio resource control for a reader/writer or an intermediate device is supported, and an operation of supporting providing radio resource control for AIoT communication is supported; and
      the second support information is used to indicate at least one of the following: an AIoT communication service is supported, and intermediate device-based AIoT communication is supported.

According to a sixth aspect, a communication apparatus is provided, including:
a third execution module, configured to execute a third operation, where the third operation includes at least one of the following:
authorizing or activating a second communication device to operate as at least one of the following devices: a reader/writer device, an intermediate device, a device communicating with an AIoT device, a device executing an AIoT task, an excitation source, and a carrier source; and
sending first information, where the first information is used to indicate at least one of the following:
   the second communication device is authorized to operate as at least one of the following devices: a reader/writer device, an intermediate device, a device communicating with an AIoT device, a device executing an AIoT task, an excitation source, and a carrier source; and
   the second communication device is activated to operate as at least one of the following devices: a reader/writer device, an intermediate device, a device communicating with an AIoT device, a device executing an AIoT task, an excitation source, and a carrier source.

According to a seventh aspect, a communication device is provided, where the terminal includes a processor and a memory, the memory stores a program or an instruction executable on the processor, and when the program or the instruction is executed by the processor, the steps of the method according to the first aspect, the second aspect, or the third aspect are implemented.

According to an eighth aspect, a communication device is provided, including a processor and a communication interface, where the processor is configured to execute at least one of the following:
authorizing a second communication device to operate as at least one of the following devices: a reader/writer device, an intermediate device, a device communicating with an ambient Internet of things AIoT device, a device executing an AIoT task, an excitation source, and a carrier source;
activating a second communication device to operate as at least one of the following devices: a reader/writer device, an intermediate device, a device communicating with an AIoT device, a device executing an AIoT task, an excitation source, and a carrier source; and
obtaining first information; where
the first information is used to indicate at least one of the following:
   the second communication device is authorized to operate as at least one of the following devices: a reader/writer device, an intermediate device, a device communicating with an ambient Internet of things AIoT device, a device executing an AIoT task, an excitation source, and a carrier source; and
   the second communication device is activated to operate as at least one of the following devices: a reader/writer device, an intermediate device, a device communicating with an AIoT device, a device executing an AIoT task, an excitation source, and a carrier source.

According to a ninth aspect, a communication device is provided, including a processor and a communication interface, where the processor is configured to execute a second operation, and the second operation includes at least one of the following:
sending second information; and
receiving at least one of the following: first information, sixth information, first support information, second support information, and capability information of a first communication device;
where the second information includes at least one of the following:
   capability information of a second communication device, where the capability information of the second communication device is used to indicate that the second communication device supports operating as at least one of the following devices: a reader/writer device, an intermediate device, a device communicating with an AIoT device, a device executing an AIoT task, an excitation source, and a carrier source; and
   a first request, where the first request is used to request a second communication device to operate as at least one of the following devices: a reader/writer device, an intermediate device, a device communicating with an AIoT device, a device executing an AIoT task, an excitation source, and a carrier source; where
   the intermediate device includes at least one of the following: a device that relays or assists in communication between the first communication device and an AIoT device, a communication device between the first communication device and an AIoT device, a device that extends a coverage area of the first communication device, and a device that extends the coverage area of the first communication device;
   the first information is used to indicate at least one of the following:
      the second communication device is authorized to operate as at least one of the following devices: a reader/writer device, an intermediate device, a device communicating with an ambient Internet of things AIoT device, a device executing an AIoT task, an excitation source, and a carrier source; and
      the second communication device is activated to operate as at least one of the following devices: a reader/writer device, an intermediate device, a device communicating with an AIoT device, a device executing an AIoT task, an excitation source, and a carrier source;
      the sixth information is used to indicate at least one of the following: the second communication device is authorized or activated to operate as at least one of the following devices: a reader/writer device, an intermediate device, a device communicating with an ambient Internet of things AIoT device, a device executing an AIoT task, an excitation source, and a carrier source;
      the capability information of the first communication device is used to indicate at least one of the following: the first communication device supports operating as a reader/writer, the first communication device supports communicating with an AIoT device through an intermediate device, the first communication device supports providing radio resource control for a reader/writer or an intermediate device, and the first communication device supports providing radio resource control for AIoT communication;
      the first support information is used to indicate at least one of the following: an AIoT service is supported, the first communication device supports operating as a reader/writer, the first communication device supports communicating with an AIoT device through an intermediate device, intermediate device-based AIoT communication is supported, an operation of providing radio resource control for a reader/writer or an intermediate device is supported, and an operation of supporting providing radio resource control for AIoT communication is supported; and
      the second support information is used to indicate at least one of the following: an AIoT communication service is supported, and intermediate device-based AIoT communication is supported.

According to a tenth aspect, a communication device is provided, including a processor and a communication interface, where the processor is configured to execute a third operation, and the third operation includes at least one of the following:
authorizing or activating a second communication device to operate as at least one of the following devices: a reader/writer device, an intermediate device, a device communicating with an AIoT device, a device executing an AIoT task, an excitation source, and a carrier source; and
sending first information, where the first information is used to indicate at least one of the following:
   the second communication device is authorized to operate as at least one of the following devices: a reader/writer device, an intermediate device, a device communicating with an AIoT device, a device executing an AIoT task, an excitation source, and a carrier source; and
   the second communication device is activated to operate as at least one of the following devices: a reader/writer device, an intermediate device, a device communicating with an AIoT device, a device executing an AIoT task, an excitation source, and a carrier source.

According to an eleventh aspect, a readable storage medium is provided, where the readable storage medium stores a program or an instruction, and when the program or the instruction is executed by a processor, the steps of the method according to the first aspect, the second aspect, or the third aspect are implemented.

According to a twelfth aspect, a wireless communication system is provided, including: a first communication device, a third communication device, and a fourth communication device, where the first communication device is configured to execute the steps of the method according to the first aspect, the third communication device is configured to execute the steps of the method according to the second aspect, and the fourth communication device is configured to execute the steps of the method according to the third aspect.

According to a thirteenth aspect, a chip is provided, where the chip includes a processor and a communication interface, the communication interface is coupled to the processor, and the processor is configured to run a program or an instruction to implement the method according to the first aspect, the second aspect, or the third aspect.

According to a fourteenth aspect, a computer program/program product is provided, where the computer program/program product is stored in a storage medium, and the program/program product is executed by at least one processor to implement the steps of the method as described in the first aspect, the second aspect, or the third aspect.

In the embodiments of this application, the problem that a RAN device cannot obtain relevant information about an AIoT device is solved. For example, the first communication device can authorize or activate the second communication device to operate as at least one of the following devices: a reader/writer device, an intermediate device, a device communicating with an AIoT device, a device executing an AIoT task, an excitation source, and a carrier source, or the second communication device can also learn, based on the obtained first information, that the second communication device is authorized or activated to operate as at least one of the following devices: a reader/writer device, an intermediate device, a device communicating with an AIoT device, a device executing an AIoT task, an excitation source, and a carrier source. In this way, the first communication device can obtain relevant information about a device executing an AIoT task, solving the problem in the related art that a RAN device cannot learn of a device executing an AIoT task, which helps to optimize the communication process in the wireless communication network.

### BRIEF DESCRIPTION OF DRAWINGS

FIG. 1A is one of block diagrams of a wireless communication system to which embodiments of this application can be applied;
FIG. 1B is one of block diagrams of a wireless communication system to which embodiments of this application can be applied;
FIG. 1C is one of block diagrams of a wireless communication system to which embodiments of this application can be applied;
FIG. 2 is a first schematic flowchart of a communication method in an embodiment of this application;
FIG. 3 is a second schematic flowchart of a communication method in an embodiment of this application;
FIG. 4 is a third schematic flowchart of a communication method in an embodiment of this application;

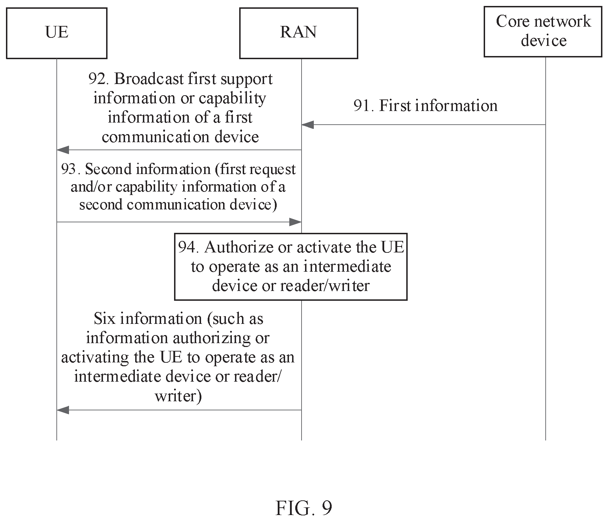

FIGs. 5a to 10 are scenario diagrams of a communication method in an embodiment of this application;
FIG. 11 is a first structural schematic diagram of a communication apparatus in an embodiment of this application;
FIG. 12 is a second structural schematic diagram of a communication apparatus in an embodiment of this application;
FIG. 13 is a third structural schematic diagram of a communication apparatus in an embodiment of this application;
FIG. 14 is a first structural schematic diagram of a communication device in an embodiment of this application;
FIG. 15 is a first structural schematic diagram of hardware of a network-side device in an embodiment of this application; and
FIG. 16 is a second structural schematic diagram of hardware of a network-side device in an embodiment of this application.

### DETAILED DESCRIPTION OF EMBODIMENTS

The technical solutions in the embodiments of this application will be clearly described below in conjunction with the accompanying drawings in the embodiments of this application. Obviously, the described embodiments are some not all of the embodiments of this application. All other embodiments obtained by those of ordinary skill in the art based on the embodiments in this application belong to the protection scope of this application.

The terms "first", "second", and the like in this application are used to distinguish between similar objects and are not used to describe a specific order or sequence. It should be understood that the terms used in this way can be interchanged as appropriate, so that the embodiments of this application can be implemented in sequences other than those illustrated or described herein, and the objects distinguished by "first" and "second" are usually of one type, and the number of objects is not limited. For example, the first object may be one or more. In addition, "or" in this application indicates at least one of the connected objects. For example, "A or B" covers three scenarios. Scenario one: including A but not including B; scenario two: including B but not including A; scenario three: including both A and B. The character "/" generally indicates that the preceding and following associated objects are in an "or" relationship.

The term "indication" in this application can be either a direct indication (or an explicit indication) or an indirect indication (or an implicit indication). The direct indication can be understood as follows: a sender explicitly informs a receiver of specific information, an operation to be executed, a request result, or the like in a sent indication. The indirect indication can be understood as follows: a receiver determines corresponding information or performs judgment according to an indication sent by a sender, and determines an operation to be executed, a request result, or the like according to the judgment result.

It is worth pointing out that the technology described in the embodiments of this application is not limited to long term evolution (Long Term Evolution, LTE)/LTE-advanced (LTE-Advanced, LTE-A) systems, but can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or other systems. The terms "system" and "network" in the embodiments of this application are often used interchangeably, and the described technology can be used not only in the above-mentioned systems and radio technologies, but also in other systems and radio technologies. The following description describes a new radio (New Radio, NR) system for exemplary purposes, and NR terminology is used in most of the following descriptions, but these technologies can also be applied to systems other than the NR system, such as the 6^{th} generation (6^{th} Generation, 6G) communication system.

Problem 1: To support the AIoT technology, a licensed spectrum needs to be used. In typology 2 or 3, devices such as UE and IAB need to use a licensed spectrum of operators to communicate with AIoT devices.

Generally, a RAN device is needed to allocate a licensed spectrum, but the RAN device does not know that an intermediate node (Intermediate node, also known as intermediate device) has been authorized to communicate with AIoT, which is one of the problems that urgently need to be solved at present. The intermediate device is a device for communication between an AIoT device and a RAN, and the intermediate device may be UE, an IAB, a relay, or the like.

Problem 2: Whether licensed spectrum supported by AIoT devices may be different also needs to be configured by NG RAN, which is also one of the problems that need to be solved at present.

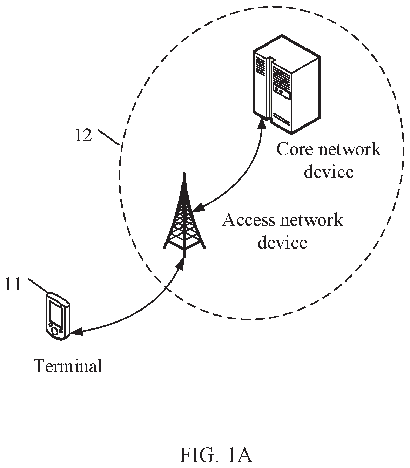

FIG. 1A is one of block diagrams of a wireless communication system to which the embodiments of this application can be applied. The wireless communication system includes a terminal 11 and a network device 12.

The terminal 11 may be a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), augmented reality (Augmented Reality, AR), a virtual reality (Virtual Reality, VR) device, a robot, a wearable device (Wearable Device), a flight vehicle (flight vehicle), vehicle user equipment (Vehicle User Equipment, VUE), a shipborne device, pedestrian user equipment (Pedestrian User Equipment, PUE), smart home (home devices with wireless communication functions, such as refrigerators, televisions, washing machines, or furniture), a game console, a personal computer (Personal Computer, PC), an automated teller machine, a self-service machine, or other terminal side devices. The wearable device includes a smart watch, a smart bracelet, smart headphones, smart glasses, smart jewelry (a smart bracelet, a smart bangle, a smart ring, a smart necklace, a smart ankle bracelet, a smart anklet, and the like), a smart wristband, smart clothing, an AIoT device, a reader/writer, or the like. The vehicle user equipment may also be referred to as a vehicle-mounted terminal, vehicle-mounted controller, vehicle-mounted module, vehicle-mounted component, vehicle-mounted chip, vehicle-mounted unit, or the like. It should be noted that the specific type of the terminal 11 is not limited in the embodiments of this application. The AIoT device or reader/writer may be a terminal.

The network-side device 12 may include an access network device or a core network device.

The access network device may also be referred to as a radio access network (Radio Access Network, RAN) device, radio access network function, or radio access network unit. The access network device may include a base station, a wireless local area network (Wireless Local Area Network, WLAN) access point (Access Point, AP), a wireless fidelity (Wireless Fidelity, WiFi) node, or the like. The base station may be referred to as a node B (Node B, NB), an evolved node B (Evolved Node B, eNB), a next generation node B (the next generation Node B, gNB), a new radio node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved node B (home evolved Node B), a transmission reception point (Transmission Reception Point, TRP), a reader/writer, or other appropriate terms in the art, as long as the same technical effect is achieved. The base station is not limited to specific technical terminology. It should be noted that in the embodiments of this application, only the base station in the NR system is taken as an example for introduction, but the base station is not limited to a specific type.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that in the embodiments of this application, only the core network device in the NR system is taken as an example for introduction, but the core network device is not limited to a specific type, and not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), an AIoT function, or the like. It should be noted that in the embodiments of this application, the core network device in the NR system is taken as an example for introduction, but the core network device is not limited to a specific type.

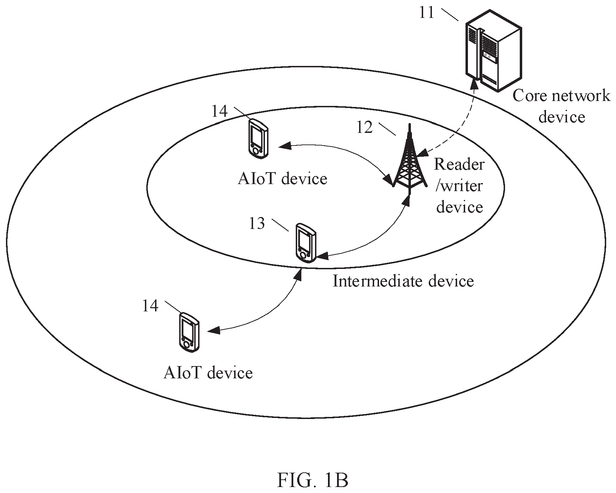

FIG. 1B is a second block diagram of a wireless communication system to which embodiments of this application can be applied. In this scenario, the wireless communication system includes a core network device 11 (optional), a reader/writer device 12, an intermediate device 13, and an AIoT device 14. For the core network device 11, reference can be made to the specific description in the example of FIG. 1A, which will not be repeated here. The reader/writer device 12 may also be referred to as an interrogator device, such as a terminal, a relay device, or an integrated access backhaul (Integrated Access Backhaul, IAB) device. The AIoT device 14 refers to a device capable of responding to AIoT tasks. It should be noted that, as shown in FIG. 1B, there may be AIoT devices that are far away, and the access network device or reader/writer device cannot cover them. In this case, the intermediate device can be used to expand the coverage area and communicate with the AIoT device; or the intermediate device assists in communication between the AIoT device and other network devices (such as access network devices or reader/writers).

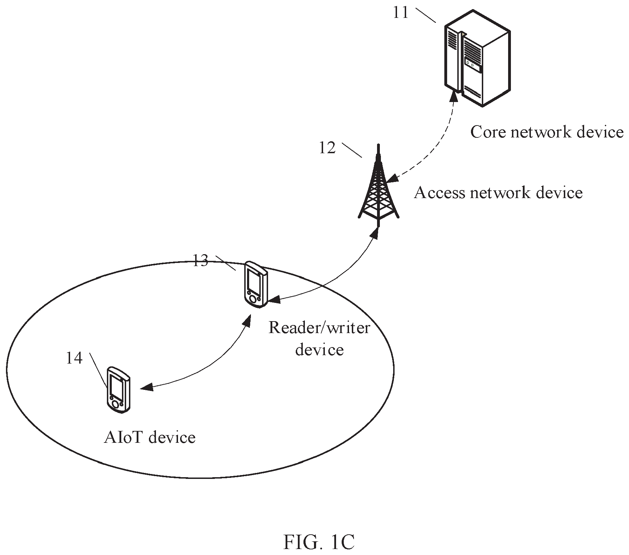

FIG. 1C is a third block diagram of a wireless communication system to which embodiments of this application can be applied. In this scenario, the wireless communication system includes a core network device 11 (optional), an access network device 12, a reader/writer device 13, and an AIoT device 14. For the core network device 11 and the access network device 12, reference can be made to the specific descriptions in the example of FIG. 1A. The reader/writer device 12 may also be referred to as an interrogator device, such as a terminal, a relay device, or an integrated access backhaul (Integrated Access Backhaul, IAB) device. The AIoT device 14 refers to a device capable of responding to AIoT tasks. As shown in FIG. 1C, the reader/writer device can directly communicate with the AIoT device without the need for an intermediate device. The radio access network device can perform radio resource control on the reader/writer device.

In an optional embodiment of the present invention, the AIoT function may also be referred to as an AIoT management and/or control network function. The AIoT function includes but is not limited to at least one of the following:
responsible for management and control of an AIoT task, an AIoT session, and an AIoT process;
generating a corresponding AIoT task based on an AIoT service request;
establishing an AIoT session or process to control an AIoT task;
distributing an AIoT task to a reader/writer (directly sending it or forwarding it through other network elements);
receiving an AIoT task execution result;
aggregating AIoT task execution results; and
exposing the AIoT task execution results to a third party.

In an embodiment, the AIoT service request may be used to request an AIoT service.

In an embodiment, the AIoT function may be a separate network function, or an existing network function (such as an AMF (for example, an AMF supporting an AIoT function) or an NEF (for example, an NEF supporting an AIoT function)).

In an optional embodiment of the present invention, the session includes an AIoT session.

In an optional embodiment of the present invention, the task includes an AIoT task.

In an optional embodiment of the present invention, the process includes an AIoT task process.

In an embodiment, the AIoT session is a session corresponding to an AIoT task.

In an embodiment, the AIoT session is a process corresponding to an AIoT task. Therefore, the AIoT session may be embodied as an AIoT task, or a process corresponding to an AIoT task.

In an optional embodiment of the present invention, the AIoT service is also referred to as AIoT traffic. The AIoT service includes at least one of the following:
a service for inventorying or discovering (referred to as paging) one or more AIoT devices;
a service for reading information from one or more AIoT devices (information stored on AIoT, (such as identification information or sensed information of the AIoT device);
a service for writing information to one or more AIoT devices;
a service for controlling one or more AIoT devices (such as activating and deactivating the AIoT device); and
a service for positioning one or more AIoT devices.

In an optional embodiment of the present invention, the AIoT task is referred to as an AIoT operation.

The AIoT task or AIoT operation includes at least one of the following:
inventorying or discovering (referred to as paging) one or more AIoT devices;
reading information from one or more AIoT devices (information stored on AIoT, (such as identification information or sensed information of the AIoT device);
writing information to one or more AIoT devices;
controlling one or more AIoT devices (such as activating and deactivating the AIoT device); and
positioning one or more AIoT devices.

In another embodiment, the AIoT operation may include at least one of the following:
an inventory or discovery operation,
a read operation,
a write operation,
a control operation (such as activating an AIoT device, or deactivating an AIoT device (referred to as killing or taking an AIoT device out of service), and
a positioning (referred to as finding) operation.

In an optional embodiment of the present invention, deactivating the AIoT device refers to turning off an RF capability of the AIoT device.

In an optional embodiment of the present invention, the reader/writer may also be referred to as one of the following: a reader/writer device, a terminal for an AIoT service, an interrogator, a reader, a querier, a communicator, a scanner, a programmer, a standalone apparatus, a portable reader, or an automatic device identification device.

In an optional embodiment of the present invention, the reader/writer may be a terminal (such as UE), or an access network device, or a device with a reader/writer function. The device with a reader/writer function includes but is not limited to one of the following: UE with a reader/writer function, and an access network device with a reader/writer function.

In an optional embodiment of the present invention, the reader/writer may be a device with one of the following features:
- a device communicating with an AIoT device, or a device communicating with an AIoT device based on a first interface;
- an access device for an AIoT device to access a wireless communication system;
- a device supporting a first interface; and
- a device supporting a first radio access technology (Radio Access Technology, RAT).

In an embodiment, the reader/writer device is a handheld or fixed device that reads (and sometimes writes) tag information, which is the original definition. It can also be understood as a device that communicates with tags, such as a terminal, or a base station, or a device with a reading/writing function, such as a reader/writer, which is not specifically limited here.

In an optional embodiment of the present invention, the first interface is a wireless interface between the reader/writer and the AIoT device. In an embodiment, the first interface may be different from the Uu interface or PC5 interface. In another embodiment, the first interface may be an enhancement of the Uu interface or an enhancement of the PC5 interface.

In an optional embodiment of the present invention, the communicating with an AIoT device includes at least one of the following:
- selecting or discovering (referred to as paging) the AIoT device;
- reading information from the AIoT device;
- writing information to the AIoT device;
- controlling the AIoT device (such as activating and deactivating the AIoT device); and
- positioning the AIoT device.

In an embodiment of the present invention, the first RAT may be a RAT for AIoT, and the first RAN may be different from the existing RAT such as NB-IOT, 2G, 3G, 4G, or 5G.

In an embodiment of this application, the reader/writer device may also be referred to as an interrogator device, and the reader/writer device is a device that communicates between the intermediate device and the core network device, such as a terminal, an IAB, or a relay device.

The reader/writer can communicate directly with the AIoT device or communicate with the AIoT device through an intermediate device. Sometimes, the reader/writer is far from the AIoT device, and the reader/writer can extend the coverage area of the reader/writer through the intermediate device. In this case, the intermediate device is referred to as a reader/writer or a component of the reader/writer.

In an embodiment, the intermediate device may be an intermediate node located between the AIoT device 11 and other devices (such as access network devices or reader/writers), but not limited thereto. The intermediate device can expand the coverage area of the other devices, or assist in communication between the AIoT device 11 and other network devices (such as access network devices or reader/writers), but not limited thereto.

In an embodiment, the intermediate device is a device that communicates between the AIoT device and the RAN, and the intermediate device may be UE, an IAB, a relay, or the like.

The AIoT device is also referred to as a terminal for an AIoT service (which can be abbreviated as AIoT terminal). In a broad sense, the terminal also includes the AIoT device, or the AIoT device includes a terminal. In a narrow sense, only UE supporting an AIoT device function is an AIoT device.

The AIoT device also includes a device supporting an AIoT device function, and the device supporting an AIoT device function is for example UE supporting an AIoT device function.

In an optional embodiment of the present invention, the AIoT device is also referred to as one of the following: a tag, a terminal for an AIoT service, a response device (such as a response device for an AIoT task or operation), an ultra-low power consumption terminal, an ultra-low complexity terminal, a near-zero power consumption terminal, a zero power consumption terminal, and the like. The embodiments of this application do not limit this. It should be understood that if the AIoT device provided in the embodiments of this application uses backscattering technology, the AIoT device may also be referred to as a backscattering communication device or backscattering device.

In an embodiment, the AIoT device may be a tag or an electronic tag (that is, RFID tag). Tag is a common name for RFID, and RFID is an abbreviation for radio frequency identification (Radio Frequency Identification).

In an optional embodiment of the present invention, the AIoT device can be classified into multiple types of devices based on energy source (energy source), backscattering technology or active signal generation capability, energy storage capability (energy storage capability), passive (Passive) communication, active (Active) communication, or the like.

In an embodiment, the radio frequency identification technology of AIoT devices can be divided into three types: active, passive, and semi-active. Passive AIoT devices can also be referred to as passive IoT, that is, passive IoT devices.

In an embodiment, the communication mode of the AIoT device may be one of the following: using backscattering RF signals for signal transmission, or having active signal generation capability.

In an embodiment, the energy of the AIoT device can come from the environment, such as RF energy, thermal energy, wind energy, or kinetic energy, and can also be referred to as ambient IoT.

In an embodiment, the AIoT device can be regarded as a terminal for an AIoT service, so it can also be regarded as a terminal. The AIoT device can be called a terminal device.

The AIoT device includes but is not limited to one of the following:
(1) A passive device (Passive Device), which has energy storage capability, no independent signal generation/amplification capability, and uses backscattering technology for data transmission.
(2) A semi-passive device (semi-passive Device), which also belongs to the category of passive device (Passive Device). It has energy storage capability, no independent signal generation capability, and uses backscattering technology for data transmission. The stored energy can be used to amplify a reflected signal.
(3) An active device (Active Device), which has energy storage capability and independent signal generation capability, that is, has an active RF component for data transmission.
(4) A passive device, which has no energy storage, and uses backscattering technology for data transmission.
(5) The AIoT device may be a device with at least one of the following features:
   featuring peak power consumption of about 1 µW,
   having an energy storage function,
   having an initial sampling frequency offset (Sampling Frequency Offset, SFO) up to 10X ppm,
   the device having neither downlink amplification nor uplink amplification; and
   uplink (Uplink, UL) transmission of the device using backscattering on an externally provided carrier.
(6) The AIoT device may be a device with at least one of the following features:
   featuring peak power consumption ≤ a few hundred µW,
   having energy storage,
   having an initial sampling frequency offset (SFO) up to 10X ppm,
   the device having a downlink and/or uplink amplification function, and
   uplink transmission of the device being generated by the device, or backscattered on an externally provided carrier.
(7) The AIoT device may be a device having the following feature:
   - a device that communicates with a reader/writer, or a device that communicates with a reader/writer over a first interface;
   - a device capable of executing or responding to an AIoT task or AIoT operation;
   - a device capable of accessing a wireless communication system through a reader/writer;
   - a device that supports a first interface; and
   - a device that supports a first RAT.

In an embodiment, the AIoT device is an Internet of things device that is not an NB-IoT device.

In an embodiment, the AIoT device includes a low-cost, low-complexity, low-power, or low-power consumption IoT device.

In an optional embodiment of the present invention, the active communication is further divided into one of the following: (1) DOA device-originated - autonomous: active communication autonomously initiated by a device; and (2) DO-DTT device-originated - device-terminated triggered: triggered active communication. For example, the device initiates the communication only upon receiving downlink trigger signaling.

Optionally, in the embodiments of this application, obtaining can be understood as obtaining from configuration, receiving, receiving upon acceptance of a request, obtaining through self-learning, deriving based on unreceived information, or obtaining after processing based on received information, which can be determined according to actual needs, and the embodiments of this application do not limit this. For example, if no capability indication information sent by a device is received, it can be inferred that the device does not support the capability.

Optionally, sending may include broadcasting, broadcasting in a system message, or returning in response to a request.

In an optional embodiment of this application, the communication device may include at least one of the following: a communication network element and a terminal.

In an embodiment of this application, the communication network element may include at least one of the following: a core-network network element and a radio-access-network network element.

In the embodiments of this application, the core-network network element (core-network network element) may include but is not limited to at least one of the following: a core network device, a core network node, a core network function, a core-network network element, a mobility management entity (Mobility Management Entity, MME), an access and mobility management function (Access Management Function, AMF), a session management function (Session Management Function, SMF), a user plane function (User Plane Function, UPF), a serving gateway (Serving GW, SGW), a PDN gateway (PDN Gateway, PDN gateway), a policy control function (Policy Control Function, PCF), a policy and charging rules function (Policy and Charging Rules Function, PCRF), a serving GPRS support node (Serving GPRS Support Node, SGSN), a gateway GPRS support node (Gateway GPRS Support Node, GGSN), and an application function (Application Function, AF).

In the embodiments of this application, the RAN network element may include but is not limited to at least one of the following: a radio access network device, a radio access network node, a radio access network function, a radio access network unit, a 3rd generation partnership project (3rd Generation Partnership Project, 3GPP) radio access network, a non-3GPP radio access network, a centralized unit (Centralized Unit, CU), a distributed unit (Distributed Unit, DU), a base station, an evolved Node B (evolved Node B, eNB), a 5G base station (gNB), a radio network controller (Radio Network Controller, RNC), a Node B (NodeB), a non-3GPP inter-working function (Non-3GPP Inter Working Function, N3IWF), an access controller (Access Controller, AC) node, an access point (Access Point, AP) device, a wireless local area network (Wireless Local Area Networks, WLAN) node, and N3IWF.

A base station may be a base transceiver station (BTS, Base Transceiver Station) in a global system for mobile communications (Global System for Mobile Communications, GSM) or CDMA, or a Node B (NodeB) in a wideband code division multiple access (Wideband Code Division Multiple Access, WCDMA), an evolved Node B (eNB, evolutional Node B) in LTE, and a 5G base station (gNB), and this is not limited in the embodiments of this application.

In an embodiment of this application, the UE may include one of the following: a terminal device, a terminal device and a card, and a card.

In an embodiment of this application, the card may include one of the following: a subscriber identity module (Subscriber Identity Module, SIM) card, a universal subscriber identity module (Universal Subscriber Identity Module, USIM) card, or an embedded subscriber identity module (Embedded SIM, eSIM).

In an embodiment of this application, the terminal may include at least one of the following: a relay supporting a terminal function and a terminal supporting a relay function. The terminal may also be referred to as a terminal device or user equipment (User Equipment, UE). The terminal may be a mobile phone, a tablet personal computer (Tablet Personal Computer), a laptop computer (Laptop Computer), a personal digital assistant (Personal Digital Assistant, PDA), a mobile Internet device (Mobile Internet Device, MID), a wearable device (Wearable Device) or a vehicle-mounted device and other terminal-side devices. It should be noted that the specific type of the terminal is not limited in the embodiments of this application.

In an embodiment of this application, being allowed includes being authorized.

In an embodiment of this application, being authorized means being allowed.

In an embodiment of this application, an anchor point gateway is also referred to as a gateway that terminates the N6 interface, and the N6 interface is an interface between a mobile communication network and a data network (Data Network, DN).

Ambient Internet of things refers to the technology that utilizes ambient energy harvesting technology to convert surrounding available signals and energy into electrical energy to drive its own circuit, and that uses backscattering as the core communication mode to transmit information to target nodes.

Ambient Internet of things (Ambient Internet of Things, AIoT), also known as ambient power-enabled Internet of things (Ambient power-enabled Internet of Things, Ambient power-enabled IoT), is a type of IoT service. AIoT devices are low-power IoT devices, with overall low power consumption for this type of device, including low-power signal reception and low-power signal transmission. Due to the overall low power consumption, the communication energy can be sourced from the environment, such as wind energy, kinetic energy, thermal energy, or radio frequency RF signals. AIoT devices can also be described as passive (passive) IoT devices or responder devices.

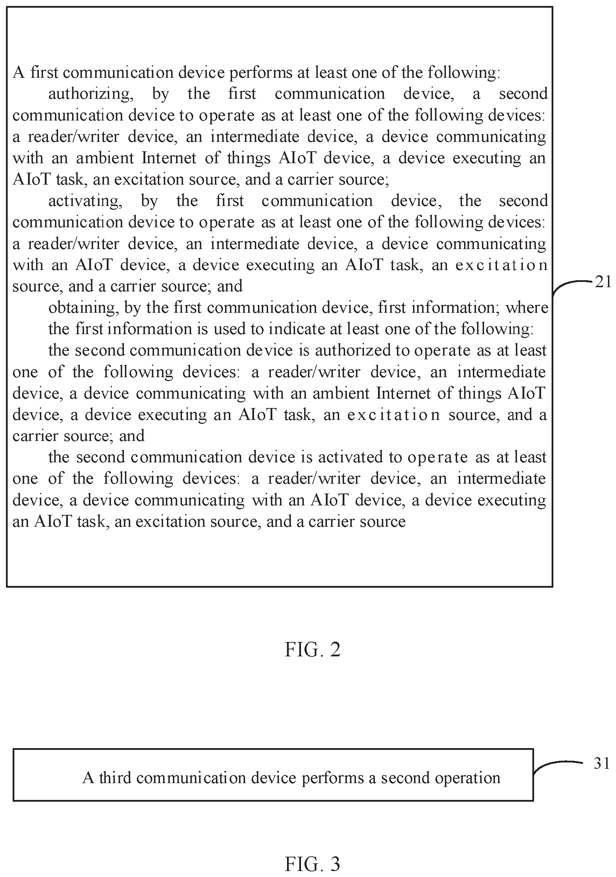

Referring to FIG. 2, an embodiment of this application provides a communication method applied to a first communication device. The first communication device includes but is not limited to one of the following: an access network device (such as a RAN device (such as a RAN device that can provide radio resource control for AIoT communication, or a RAN device with a reader/writer function)), a reader/writer (such as a device with a reader/writer function), a device that can provide radio resource control for AIoT communication, or the like. As shown in FIG. 2, the method includes:

Step 21: The first communication device performs at least one of the following:
authorizing, by the first communication device, a second communication device to operate as at least one of the following devices: a reader/writer device, an intermediate device, a device communicating with an ambient Internet of things AIoT device, a device executing an AIoT task, an excitation source, and a carrier source;
activating, by the first communication device, the second communication device to operate as at least one of the following devices: a reader/writer device, an intermediate device, a device communicating with an AIoT device, a device executing an AIoT task, an excitation source, and a carrier source; and
obtaining, by the first communication device, first information.

The first information is used to indicate at least one of the following:
the second communication device is authorized to operate as at least one of the following devices: a reader/writer device, an intermediate device, a device communicating with an ambient Internet of things AIoT device, a device executing an AIoT task, an excitation source, and a carrier source; and
the second communication device is activated to operate as at least one of the following devices: a reader/writer device, an intermediate device, a device communicating with an AIoT device, a device executing an AIoT task, an excitation source, and a carrier source.

In an embodiment, the first communication device includes an access network device or a reader/writer device. As shown in FIG. 1B, there may be distant AIoT devices that cannot be covered by the access network device or reader/writer device. In this case, an intermediate device can be used to expand the coverage area and communicate with the AIoT device; or an intermediate device assists in communication between the AIoT device and other network devices (such as access network devices or reader/writers). The first communication device needs to know which second communication devices are authorized as intermediate devices, and can select some of the authorized second communication devices to activate as intermediate devices for the first communication device to communicate with the AIoT device. Alternatively, the core network has already activated the second communication device as an intermediate device for the first communication device, and the first communication device can use it directly.

In another embodiment, the first communication device is an access network device, and the second communication device is a reader/writer device. The first communication device needs to know that the second communication device is authorized or activated as a reader/writer in order to perform radio resource control (such as configuration of licensed spectrum) on the second communication device.

In an embodiment, the obtaining, by the first communication device, first information includes: receiving, by the first communication device, the first information sent by a fourth communication device.

In an embodiment, the obtaining, by the first communication device, first information includes receiving the first information sent by at least one of the following: a core network device, a terminal, the second communication device, a device having at least one function of access and mobility management, a device having an AIoT function, a device having an NEF function, and a device having an application function.

Optionally, in the case of "authorizing, by the first communication device, a second communication device to operate as at least one of the following devices: a reader/writer device, an intermediate device, a device communicating with an ambient Internet of things AIoT device, a device executing an AIoT task, an excitation source, and a carrier source", the first communication device sends information used to indicate the following (such as sixth information) to a third communication device or the second communication device: the second communication device is authorized to operate as at least one of the following devices: a reader/writer device, an intermediate device, a device communicating with an ambient Internet of things AIoT device, a device executing an AIoT task, an excitation source, and a carrier source.

Optionally, in the case of "activating, by the first communication device, the second communication device to operate as at least one of the following devices: a reader/writer device, an intermediate device, a device communicating with an AIoT device, a device executing an AIoT task, an excitation source, and a carrier source", the first communication device sends information used to indicate the following (such as sixth information) to a third communication device or the second communication device: the second communication device is activated to operate as at least one of the following devices: a reader/writer device, an intermediate device, a device communicating with an AIoT device, a device executing an AIoT task, an excitation source, and a carrier source.

The intermediate device includes at least one of the following:
a device that relays or assists in communication between the first communication device and an AIoT device;
a communication device between the first communication device and an AIoT device;
a device that forms a reader/writer together with the first communication device;
a device that extends a coverage area of the first communication device; and
an intermediate device of the first communication device, where the intermediate device of the first communication device is configured to communicate with an AIoT device.

Optionally, the first communication device includes at least one of the following: an access network device, and a reader/writer.

The excitation source is a device that provides one of the following: an incentive signal, energy, and a carrier. It is not difficult to understand that the excitation source can also be referred to as one of the following: a carrier source, and an energy source.

The carrier source is a device that provides a carrier. Since the carrier carries energy, the AIoT device can achieve signal transmission by reflecting the received carrier. This communication manner is also referred to as backscattering.

In an embodiment, the excitation source is a same device as the reader/writer device, or a different device from the reader/writer device.

The excitation source is a same device as the intermediate device, or a different device from the intermediate device.

It should be noted that the intermediate device may also be referred to as an intermediate device of the reader/writer device.

It should be noted that the second communication device being authorized to operate as at least one of the following: a reader/writer device, an intermediate device, a device communicating with an ambient Internet of things AIoT device, and a device executing an AIoT task can mean that the second communication device is authorized to operate as one of the following: a device communicating directly with the AIoT device, and a device communicating with the AIoT device through a wireless interface.

In the embodiments of this application, the first communication device can authorize or activate the second communication device to operate as at least one of the following devices: a reader/writer device, an intermediate device, a device communicating with an AIoT device, a device executing an AIoT task, an excitation source, and a carrier source, or the second communication device can also learn, based on the obtained first information, that the second communication device is authorized or activated to operate as at least one of the following devices: a reader/writer device, an intermediate device, a device communicating with an AIoT device, a device executing an AIoT task, an excitation source, and a carrier source. In this way, the first communication device can obtain relevant information about a device executing an AIoT task, solving the problem in the related art that a RAN device cannot learn of a device executing an AIoT task, which helps to optimize the communication process in the wireless communication network.

Optionally, in the embodiments of this application, the method further includes:
performing, by the first communication device, a first operation according to the first information, where the first operation includes at least one of the following:
storing the first information;
performing radio resource control on the second communication device; and
activating the second communication device to operate as at least one of the following devices: a reader/writer device, an intermediate device, an excitation source, a carrier source, a device communicating with an AIoT device, and a device executing an AIoT task.

It should be noted that the radio resource control includes radio resource control (such as radio resource configuration) performed for AIoT communication (such as communication with an AIoT device).

Optionally, the performing radio resource control on the second communication device includes at least one of the following:
configuring a spectrum, a frequency, or a carrier to be used by the second communication device;
performing a radio measurement configuration on the second communication device; and
positioning the second communication device, or configuring the second communication device to perform positioning measurement.

It should be noted that radio resource control is, for example, radio resource configuration (which can be abbreviated as radio configuration).

Optionally, the spectrum is a spectrum (such as a licensed spectrum) for communication with an AIoT device.

Optionally, the frequency is a frequency (such as a frequency in a licensed spectrum) for communication with an AIoT device.

Optionally, the carrier is a carrier (such as a carrier in a licensed spectrum) for communication with an AIoT device.

For example, the performing, by the first communication device, radio resource control on the second communication device includes configuring the spectrum, the frequency, or the carrier to be used by the second communication device. Optionally, the spectrum is a spectrum (such as licensed spectrum) for communication with an AIoT device; the frequency may be a frequency (such as a frequency in a licensed spectrum) for communication with an AIoT device; and the carrier may be a carrier (such as a carrier in the licensed spectrum) for communication with the AIoT device.

Alternatively, the performing, by the first communication device, radio resource control on the second communication device may include performing radio measurement configuration on the second communication device, so as to obtain radio resource information of the second communication device, enabling the first communication device to clearly know the radio resources of the second communication device.

Alternatively, the performing, by the first communication device, radio resource control on the second communication device may include positioning the second communication device, or configuring the second communication device to perform positioning measurement, so as to obtain location information of the second communication device.

Optionally, in the embodiments of this application, the performing a first operation, or the activating the second communication device to operate as at least one of the following devices: a reader/writer device, an intermediate device, a device communicating with an AIoT device, a device executing an AIoT task, an excitation source, and a carrier source includes:
in a case that a first condition is satisfied, performing the first operation, or activating the second communication device to operate as at least one of the following devices: a reader/writer device, an intermediate device, a device communicating with an AIoT device, a device executing an AIoT task, an excitation source, and a carrier source.

The first condition includes at least one of the following:
the second communication device satisfies at least one of the following: the second communication device is capable of communicating with the first communication device, the second communication device is capable of communicating with an AIoT device, the second communication device satisfies an AIoT task requirement, the second communication device is capable of extending a coverage area of the first communication device, and the second communication device is a terminal accessing the first communication device;
the second communication device supports operating as at least one of the following devices: a reader/writer device, an intermediate device, a device communicating with an AIoT device, a device executing an AIoT task, an excitation source, and a carrier source; and
the second communication device is authorized to operate as at least one of the following devices: a reader/writer device, an intermediate device, a device communicating with an AIoT device, a device executing an AIoT task, an excitation source, and a carrier source.

In an embodiment, the second communication device determines, based on at least one of a radio measurement result and a positioning result, that at least one of the following is satisfied: the second communication device is capable of communicating with the first communication device, the second communication device is capable of communicating with an AIoT device, the second communication device satisfies an AIoT task requirement, and the second communication device is capable of extending a coverage area of the first communication device. It is not difficult to understand that the intermediate device is for relaying communication between the first communication device and the AIoT device, so its position or measured wireless signal strength needs to be suitable for communication with the first communication device and communication with the AIoT device as well.

In the embodiments of this application, the obtaining, by the first communication device, first information includes:
receiving, by the first communication device, the first information sent by at least one of the following devices: a core network device, a terminal, the second communication device, a device having at least one function of access and mobility management, a device having an AIoT function, a device having an NEF function, and a device having an application function.

Optionally, the device having an application function includes AF.

Optionally, the device having at least one function of access and mobility management includes AMF.

Optionally, the "receiving, by the first communication device, the first information sent by at least one of the following devices" may mean direct reception or indirect reception. For example, in an embodiment, the AF sends the first information to the NEF, the NEF forwards it to the AMF, and the AMF forwards it to the first communication device. Alternatively, in another embodiment, the AF may directly send the first information to the first communication device.

Optionally, in the embodiments of this application, the method further includes:
obtaining, by the first communication device, second information; and
performing, by the first communication device, at least one of the following according to the second information:
   authorizing the second communication device to operate as at least one of the following devices: a reader/writer device, an intermediate device, a device communicating with an ambient Internet of things AIoT device, a device executing an AIoT task, an excitation source, and a carrier source;
   activating the second communication device to operate as at least one of the following devices: a reader/writer device, an intermediate device, a device communicating with an AIoT device, a device executing an AIoT task, an excitation source, and a carrier source;
   determining the first information;
   storing the first information; and
   performing radio resource control on the second communication device.

The second information includes at least one of the following:
capability information of the second communication device, where the capability information of the second communication device is used to indicate that the second communication device supports operating as at least one of the following devices: a reader/writer device, an intermediate device, a device communicating with an AIoT device, a device executing an AIoT task, an excitation source, and a carrier source; and
a first request, where the first request is used to request the second communication device to operate as at least one of the following devices: a reader/writer device, an intermediate device, a device communicating with an AIoT device, a device executing an AIoT task, an excitation source, and a carrier source.

In an embodiment, the obtaining second information includes: receiving the second information from a third communication device.

For example, the third communication device sends the second information to the first communication device, where the second information includes capability information of the second communication device and/or a first request, and thus the first communication device can learn, based on the capability information of the second communication device, that the second communication device supports operating as at least one of: a reader/writer device, an intermediate device, a device communicating with an AIoT device, a device executing an AIoT task, an excitation source, and a carrier source, or the first communication device can learn, based on the first request, that the second communication device is requested to operate as at least one of: a reader/writer device, an intermediate device, a device communicating with an AIoT device, a device executing an AIoT task, an excitation source, and a carrier source. According to the capability information of the second communication device and/or request, the first communication device may authorize or activate the second communication device to operate as at least one of: a reader/writer device, an intermediate device, a device communicating with an AIoT device, a device executing an AIoT task, an excitation source, and a carrier source, or determine and/or store the first information, or perform radio resource control on the second communication device. For the specific content of the first information and the relevant content of the first communication device performing the first operation according to the first information, reference can be made to the previous description, which is not repeated here.

Radio resource control is, for example, radio resource configuration (which can be abbreviated as radio configuration).

Optionally, the spectrum is a spectrum (such as a licensed spectrum) for communication with an AIoT device.

Optionally, the frequency is a frequency (such as a frequency in a licensed spectrum) for communication with an AIoT device.

Optionally, the carrier is a carrier (such as a carrier in a licensed spectrum) for communication with an AIoT device.

Optionally, the second information further includes at least one of the following:
information used to identify the reader/writer device;
information used to identify the first communication device;
information used to identify the AIoT task; and
information used to identify the second communication device.

Optionally, the first request further includes at least one of the following:
information used to identify the reader/writer device;
information used to identify the AIoT task; and
information used to identify the second communication device.

Optionally, in the embodiments of this application, before the obtaining, by the first communication device, first information, the method further includes at least one of the following:
sending, by the first communication device, third information, where the third information includes a second request; and
sending, by the first communication device, fourth information, where the fourth information includes at least one of the following: capability information of the first communication device, and first support information.

The capability information of the first communication device is used to indicate at least one of the following: the first communication device supports operating as a reader/writer, the first communication device supports communicating with an AIoT device through an intermediate device, the first communication device supports providing radio resource control for a reader/writer or an intermediate device, and the first communication device supports providing radio resource control for AIoT communication;
the second request is used to request the second communication device to operate as at least one of the following devices: a reader/writer device, an intermediate device, a device communicating with an AIoT device, a device executing an AIoT task, an excitation source, and a carrier source; and
the first support information is used to indicate at least one of the following: an AIoT service is supported, the first communication device supports operating as a reader/writer, the first communication device supports communicating with an AIoT device through an intermediate device, intermediate device-based AIoT communication is supported, an operation of providing radio resource control for a reader/writer or an intermediate device is supported, and an operation of supporting providing radio resource control for AIoT communication is supported.

In an embodiment, the first communication device sends the third information to a core network device (such as a fourth communication device).

In an embodiment, the first communication device sends the fourth information to a third communication device.

In an embodiment, the sending, by the first communication device, first support information includes: broadcasting, by the first communication device, the first support information (such as in a system information block (System Information Block, SIB)).

In an embodiment, the sending, by the first communication device, capability information of the first communication device includes: broadcasting, by the first communication device, the capability information of the first communication device (such as in a SIB).

In an embodiment, the sending, by the first communication device, first support information includes: broadcasting, by the first communication device, the first support information (such as in a system information block (System Information Block, SIB)).

In an embodiment, the sending, by the first communication device, capability information of the first communication device includes: broadcasting, by the first communication device, the capability information of the first communication device (such as in a SIB).

Optionally, the third information further includes at least one of the following:
information used to identify the reader/writer device;
information used to identify the first communication device;
information used to identify the AIoT task; and
information used to identify the second communication device.

In an embodiment, the reader/writer is a reader/writer corresponding to the intermediate device. That is, the intermediate device is an intermediate device of the reader/writer.

In an embodiment, intermediate devices of different reader/writers may be different, and readers/writers connected to different intermediate devices may also be different. It is not difficult to understand that the information used to identify the reader/writer can help determine which reader/writer's intermediate device the intermediate device is.

In an embodiment, execution devices for different AIoT tasks may be different, and AIoT tasks executed by different execution devices may also be different. It is not difficult to understand that the information used to identify the AIoT task can help determine which AIoT task execution device the second communication device is.

In an embodiment, one reader/writer may have multiple intermediate devices, and the second-communication-device identifier may be used to help distinguish different second communication devices.

Optionally, the information used to identify the reader/writer includes: identification information of the reader/writer.

Optionally, the information used to identify the AIoT task includes: identification information of the AIoT task.

Optionally, the information used to identify the second communication device includes: identification information of the second communication device.

Optionally, in the embodiments of this application, the second request includes at least one of the following:
information used to identify the reader/writer device;
information used to identify the AIoT task; and
information used to identify the second communication device.

In an embodiment, intermediate devices of different reader/writers may be different, and readers/writers connected to different intermediate devices may also be different. It is not difficult to understand that the information used to identify the reader/writer can help determine which reader/writer's intermediate device the intermediate device is.

In another embodiment, in a case that the first communication device is a reader/writer device, the third information or the second request may not include the information used to identify the reader/writer device.

In an embodiment, one reader/writer may have multiple intermediate devices, and the second-communication-device identifier may be used to help distinguish different second communication devices.

In an embodiment, execution devices for different AIoT tasks may be different, and AIoT tasks executed by different execution devices may also be different. It is not difficult to understand that the information used to identify the AIoT task can help determine which AIoT task execution device the second communication device is.

Optionally, the information used to identify the reader/writer includes: identification information of the reader/writer.

Optionally, the information used to identify the AIoT task includes: identification information of the AIoT task.

Optionally, the information used to identify the second communication device includes: identification information of the second communication device.

Optionally, in the embodiments of this application, the sending, by the first communication device, at least one of third information and fourth information includes:
in a case that a second condition is satisfied, sending, by the first communication device, at least one of the third information and the fourth information;
where the second condition includes: the second communication device satisfies at least one of the following:
   the second communication device is capable of communicating with the first communication device;
   the second communication device is capable of communicating with an AIoT device;
   the second communication device satisfies an AIoT task requirement; and
   the second communication device is capable of extending a coverage area of the first communication device.

In an embodiment, the second communication device determines, based on at least one of a measurement result and a positioning result, that at least one of the following is satisfied: the second communication device is capable of communicating with the first communication device, the second communication device is capable of communicating with an AIoT device, the second communication device satisfies an AIoT task requirement, and the second communication device is capable of extending a coverage area of the first communication device.

Optionally, the sending, by the first communication device, at least one of third information and fourth information includes:
obtaining, by the first communication device, at least one of a first request, a positioning result of the second communication device, and measurement information of the second communication device;
determining, by the first communication device, at least one of the third information and the fourth information according to at least one of the first request, the positioning result of the second communication device, and the measurement information of the second communication device; and
sending, by the first communication device, at least one of the third information and the fourth information; where
the first request is used to request the second communication device to operate as at least one of the following devices: a reader/writer device, an intermediate device, a device communicating with an AIoT device, a device executing an AIoT task, an excitation source, and a carrier source.

In an embodiment, the first communication device receives second information (including a first request) sent by a third communication device (such as the second communication device (such as a terminal)).

In an embodiment, the first communication device sends third information (including a second request) to a fourth communication device or a core network device.

At least one of the measurement information and the positioning result may be used to determine that one of the following is satisfied: the second communication device is capable of communicating with the third communication device; the second communication device is capable of communicating with an AIoT device, the second communication device satisfies an AIoT task requirement, and the second communication device is capable of extending a coverage area of the first communication device.

Optionally, the method further includes:
sending, by the first communication device, sixth information to a third communication device or the second communication device;
where the sixth information is used to indicate at least one of the following:
   the second communication device is authorized or activated to operate as at least one of the following devices: a reader/writer device, an intermediate device, a device communicating with an ambient Internet of things AIoT device, a device executing an AIoT task, an excitation source, and a carrier source.

Optionally, the second communication device includes at least one of the following: a terminal, an integrated access and backhaul IAB device, and a relay device.

Through the embodiments of this application, the first communication device (such as a RAN device or reader/writer device) can authorize or activate the second communication device to operate as at least one of the following devices: a reader/writer device, an intermediate device, a device communicating with an AIoT device, a device executing an AIoT task, an excitation source, and a carrier source, or the second communication device can also learn, based on the obtained first information, that the second communication device is authorized or activated to operate as at least one of the following devices: a reader/writer device, an intermediate device, a device communicating with an AIoT device, a device executing an AIoT task, an excitation source, and a carrier source. In this way, the first communication device can authorize or activate the second communication device to execute an AIoT task or learn that the second communication device can execute an AIoT task, solving the problem in the related art that a RAN device cannot learn of a device executing an AIoT task, which helps to optimize the communication process in the wireless communication network.

Referring to FIG. 3, an embodiment of this application provides a communication method applied to a third communication device. The third communication device includes but is not limited to one of the following: a terminal (such as a terminal with a reader/writer or intermediate device function), a second communication device (such as a device with a reader/writer or intermediate device function), a reader/writer, an intermediate device, an AF, and an AIoT device. As shown in FIG. 3, the method includes:
Step 31: The third communication device performs a second operation, where the second operation includes at least one of the following:
sending second information; and
receiving at least one of the following: first information, sixth information, first support information, second support information, and capability information of a first communication device.

The second information includes at least one of the following:
capability information of a second communication device, where the capability information of the second communication device is used to indicate that the second communication device supports operating as at least one of the following devices: a reader/writer device, an intermediate device, a device communicating with an AIoT device, a device executing an AIoT task, an excitation source, and a carrier source; and
a first request, where the first request is used to request the second communication device to operate as at least one of the following devices: a reader/writer device, an intermediate device, a device communicating with an AIoT device, a device executing an AIoT task, an excitation source, and a carrier source.

The intermediate device includes at least one of the following:
a device that relays or assists in communication between the first communication device and an AIoT device;
a communication device between the first communication device and an AIoT device;
a device that forms a reader/writer together with the first communication device;
a device that extends a coverage area of the first communication device; and
an intermediate device of the first communication device, where the intermediate device of the first communication device is configured to communicate with an AIoT device.

The first information is used to indicate at least one of the following:
the second communication device is authorized to operate as at least one of the following devices: a reader/writer device, an intermediate device, a device communicating with an ambient Internet of things AIoT device, a device executing an AIoT task, an excitation source, and a carrier source; and
the second communication device is activated to operate as at least one of the following devices: a reader/writer device, an intermediate device, a device communicating with an AIoT device, a device executing an AIoT task, an excitation source, and a carrier source.

The sixth information is used to indicate at least one of the following: the second communication device is authorized or activated to operate as at least one of the following devices: a reader/writer device, an intermediate device, a device communicating with an ambient Internet of things AIoT device, a device executing an AIoT task, an excitation source, and a carrier source;
the capability information of the first communication device is used to indicate at least one of the following: the first communication device supports operating as a reader/writer, the first communication device supports communicating with an AIoT device through an intermediate device, the first communication device supports providing radio resource control for a reader/writer or an intermediate device, and the first communication device supports providing radio resource control for AIoT communication;
the first support information is used to indicate at least one of the following: an AIoT service is supported, the first communication device supports operating as a reader/writer, the first communication device supports communicating with an AIoT device through an intermediate device, intermediate device-based AIoT communication is supported, an operation of providing radio resource control for a reader/writer or an intermediate device is supported, and an operation of supporting providing radio resource control for AIoT communication is supported; and
the second support information is used to indicate at least one of the following: an AIoT communication service is supported, and intermediate device-based AIoT communication is supported.

In an embodiment, the receiving first information may be: receiving, by the third communication device, the first information sent by a fourth communication device or the first communication device.

In an embodiment, after sending the second information, the third communication device receives at least one of the first information and the sixth information.

Optionally, the receiving first information includes: receiving the first information sent by a core network device or a fourth communication device.

Optionally, the receiving sixth information includes: receiving the sixth information sent by an access network device, a reader/writer device, or the first communication device.

In a case that the third communication device is the second communication device, according to information including at least one of the sixth information and the first information, the third communication device is activated to operate as at least one of the following devices: a reader/writer device, an intermediate device, a device communicating with an ambient Internet of things AIoT device, a device executing an AIoT task, an excitation source, and a carrier source.

Optionally, the third communication device includes at least one of the following: a terminal, the second communication device, an intermediate device, and a device including an AF.

In an embodiment, the third communication device is the same as the second communication device. In another embodiment, the third communication device is different from the second communication device.

It should be noted that the second communication device operating as one of the following: a reader/writer device, an intermediate device, a device communicating with an ambient Internet of things AIoT device, a device executing an AIoT task can mean that the second communication device operates as one of the following: a device communicating directly with an AIoT device, and a device communicating with an AIoT device through a wireless interface. It is not difficult to understand that a reader/writer communicating with the AIoT device through an intermediate device should be an indirect communication device.

In an embodiment, the reader/writer device includes one of the following: a RAN device with a reader/writer function, or UE with a reader/writer function.

In an embodiment, the sending, by the third communication device, second information includes: sending, by the third communication device, the second information to at least one of the following: the first communication device, a fourth communication device, an access network device, and a core network device.

Optionally, in the embodiments of this application, the second information further includes at least one of the following:
information used to identify the reader/writer device;
information used to identify the second communication device;
information used to identify the first communication device; and
information used to identify the AIoT task.

In an embodiment, the information used to identify the first communication device in the second information, combined with the first request, may be used to request the second communication device to operate as an intermediate device of the first communication device.

Optionally, the first request further includes at least one of the following:
information used to identify the reader/writer device;
information used to identify the AIoT task; and
information used to identify the second communication device.

In an embodiment, the "information used to identify the second communication device" may be used to request the second communication device to operate as at least one of the following devices: a reader/writer device, an intermediate device, an excitation source, a carrier source, a device communicating with an ambient Internet of things AIoT device, and a device executing an AIoT task.

In another embodiment, the "information used to identify the second communication device" and the "information used to identify the reader/writer device" may be used to request the second communication device to operate as an intermediate device of the reader/writer. The information used to identify the second communication device is, for example, UE-1, and the "information used to identify the reader/writer device" is, for example, reader/writer-A. It is not difficult to understand that UE-1 and reader/writer-A can be used to request UE-1 to operate as an intermediate device of reader/writer-A.

In another embodiment, the first communication device is reader/writer-A, and the "information used to identify the second communication device" received by the first communication device may be used to request the second communication device to operate as an intermediate device of the reader/writer-A.

Optionally, the sending, by the third communication device, second information includes:
sending, by the third communication device, the second information according to information including at least one of the first information, the sixth information, the first support information, the second support information, and the capability information of the first communication device.

The receiving, by the third communication device, sixth information includes:
receiving, by the third communication device, the sixth information sent by the first communication device.

The obtaining at least one of the first support information and the capability information of the first communication device includes:
receiving, by the third communication device, fourth information sent by the first communication device, where the fourth information includes at least one of the following: capability information of the first communication device, and first support information.

The obtaining the second support information includes:
receiving, by the third communication device, the second support information sent by a fourth communication device.

Optionally, the sending, by the third communication device, second information includes:
in a case that a third condition is satisfied, sending, by the third communication device, the second information;
where the third condition includes at least one of the following:
   the first support information has been obtained, where the first support information is used to indicate at least one of the following: an AIoT service is supported, the first communication device supports operating as a reader/writer, the first communication device supports communicating with an AIoT device through an intermediate device, intermediate device-based AIoT communication is supported, an operation of providing radio resource control for a reader/writer or an intermediate device is supported, and an operation of supporting providing radio resource control for AIoT communication is supported;
   the second support information has been obtained, where the second support information is used to indicate at least one of the following: an AIoT communication service is supported, and intermediate device-based AIoT communication is supported;
   the capability information of the first communication device has been obtained, where the capability information of the first communication device is used to indicate at least one of the following: the first communication device supports operating as a reader/writer, the first communication device supports communicating with an AIoT device through an intermediate device, the first communication device supports providing radio resource control for a reader/writer or an intermediate device, and the first communication device supports providing radio resource control for AIoT communication; and
   the capability information of the second communication device has been obtained, where the capability information of the second communication device is used to indicate that the second communication device supports operating as at least one of the following devices: a reader/writer device, an intermediate device, a device communicating with an AIoT device, a device executing an AIoT task, an excitation source, and a carrier source.

That an AIoT service is supported includes: supporting allocation of a licensed spectrum for a reader/writer or intermediate device, and supporting providing radio resource control for AIoT communication. Radio resource control includes radio resource configuration. Radio resource configuration is, for example, configuration of a licensed spectrum.

Optionally, the second communication device includes at least one of the following: a terminal, an IAB device, and a relay device.

Optionally, the sending, by the third communication device, second information includes: sending, by the third communication device, the second information to at least one of the following: the first communication device, a fourth communication device, an access network device, and a core network device.

In a case that the third communication device sends the second information to the first communication device or an access network device, the first capability information in the second information may be an RRC capability.

In a case that the third communication device sends the second information to the fourth communication device or a core network device, the first capability information in the second information may be a NAS capability.

In an embodiment, the second communication device may be different from the third communication device.

In another embodiment, the second communication device may be the same as the third communication device.

In an embodiment, the third communication device is a device including an AF. In a case that the third communication device sends the first request, the first request includes at least one of the following: information used to identify a first AIoT device, and information used to identify the second communication device.

In another embodiment, the second communication device is the same as the third communication device, and in a case that the second communication device (such as UE) sends the first request, the first request may include: information used to identify a first AIoT device.

In an embodiment, in a case that an access network device or a reader/writer device sends the first request, the first request includes: information used to identify the second communication device.

In the embodiments of this application, the third communication device sends the first information to the first communication device, so that the first communication device can authorize or activate the second communication device to operate as at least one of the following devices: a reader/writer device, an intermediate device, a device communicating with an AIoT device, a device executing an AIoT task, an excitation source, and a carrier source, or the second communication device can also learn, based on the obtained first information, that the second communication device is authorized or activated to operate as at least one of the following devices: a reader/writer device, an intermediate device, a device communicating with an AIoT device, a device executing an AIoT task, an excitation source, and a carrier source. In this way, the second communication device can be authorized or activated to execute an AIoT task, solving the problem in the related art that a RAN device cannot learn of a device executing an AIoT task, which helps to optimize the communication process in the wireless communication network.

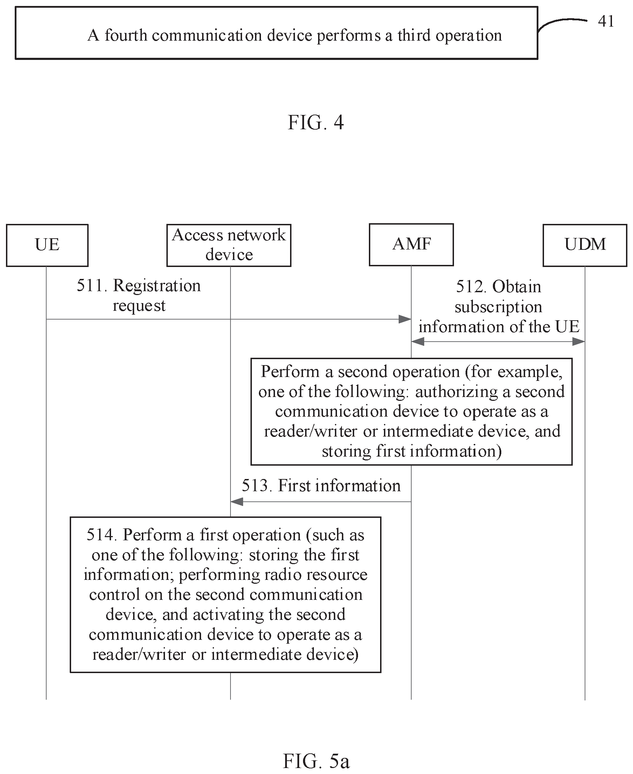

Referring to FIG. 4, an embodiment of this application provides a communication method applied to a fourth communication device. The fourth communication device includes but is not limited to one of the following: a core network device (such as AMF, NEF, or AIoT function (such as a network function responsible for AIoT management and/or control)), an access network device (such as a RAN device), and a reader/writer. As shown in FIG. 4, the method includes:

Step 41: The fourth communication device performs a third operation, where the third operation includes at least one of the following:
authorizing or activating a second communication device to operate as at least one of the following devices: a reader/writer device, an intermediate device, a device communicating with an AIoT device, a device executing an AIoT task, an excitation source, and a carrier source; and
sending first information, where the first information is used to indicate at least one of the following:
   the second communication device is authorized to operate as at least one of the following devices: a reader/writer device, an intermediate device, a device communicating with an AIoT device, a device executing an AIoT task, an excitation source, and a carrier source; and
   the second communication device is activated to operate as at least one of the following devices: a reader/writer device, an intermediate device, a device communicating with an AIoT device, a device executing an AIoT task, an excitation source, and a carrier source.

Optionally, the intermediate device includes at least one of the following:
a device that relays or assists in communication between a first communication device and an AIoT device;
a communication device between a first communication device and an AIoT device;
a device that forms a reader/writer together with a first communication device;
a device that extends a coverage area of a first communication device; and
an intermediate device of a first communication device, where the intermediate device of the first communication device is configured to communicate with an AIoT device.

Optionally, the fourth communication device includes at least one of the following: a core network device (for example: a device with AMF, a device with NEF, or a device with an AIoT control function), and an access network device.

It should be noted that the second communication device being authorized to operate as at least one of the following: a reader/writer device, an intermediate device, a device communicating with an ambient Internet of things AIoT device, and a device executing an AIoT task can mean that the second communication device is authorized to operate as one of the following: a device communicating directly with the AIoT device, and a device communicating with the AIoT device through a wireless interface.

In an embodiment, the sending first information includes: sending the first information to the first communication device, where the first communication device is the same as or different from the second communication device.

Optionally, before the performing, by a fourth communication device, a third operation, the method further includes:
sending, by the fourth communication device, second support information, where the second support information is used to indicate at least one of the following: an AIoT communication service is supported, and intermediate device-based AIoT communication is supported.

In an embodiment, the fourth communication device sends the second support information to at least one of the following: a terminal, an access network device, and the second communication device.

Optionally, before the performing, by a fourth communication device, a third operation, the method further includes:
obtaining, by the fourth communication device, at least one of subscription information of the second communication device, second information, and third information.

The subscription information of the second communication device includes information used to indicate at least one of the following:
allowing a first communication device to operate as at least one of the following devices: a reader/writer device, an intermediate device, a device communicating with an AIoT device, a device executing an AIoT task, an excitation source, and a carrier source; and
a first communication device operating as at least one of the following devices: a reader/writer device, an intermediate device, a device communicating with an AIoT device, a device executing an AIoT task, an excitation source, and a carrier source.

The second information includes at least one of the following: capability information of the second communication device, and a first request; where the capability information of the second communication device is used to indicate that the second communication device supports operating as at least one of the following devices: a reader/writer device, an intermediate device, a device communicating with an AIoT device, a device executing an AIoT task, an excitation source, and a carrier source;
the first request is used to request the second communication device to operate as at least one of the following devices: a reader/writer device, an intermediate device, a device communicating with an AIoT device, a device executing an AIoT task, an excitation source, and a carrier source; and
the third information includes a second request, where the second request is used to request the second communication device to operate as at least one of the following devices: a reader/writer device, an intermediate device, a device communicating with an AIoT device, a device executing an AIoT task, an excitation source, and a carrier source.

The obtaining subscription information of the second communication device is, for example, obtaining the subscription information of the second communication device from a UDM. The UDM sends the updated subscription information of the second communication device to the fourth communication device. The subscription information of the second communication device may be subscription information of UE.

Optionally, the obtaining, by the fourth communication device, second information includes: receiving, by the fourth communication device, the second information sent by a third communication device; or
the obtaining, by the fourth communication device, third information includes: receiving, by the fourth communication device, the third information sent by the first communication device.

In an embodiment, the subscription information of the first communication device on the UDM is provided by an AF.

The AF sends fifth information to the UDM, where the fifth information includes information used to indicate at least one of the following:
(1) allowing the first communication device to operate as at least one of the following devices: a reader/writer device, an intermediate device, a device communicating with an AIoT device, a device executing an AIoT task, an excitation source, and a carrier source; and
(2) the first communication device operating as at least one of the following devices: a reader/writer device, an intermediate device, a device communicating with an AIoT device, a device executing an AIoT task, an excitation source, and a carrier source.

The AF may send the fifth information to the UDM through an NEF or directly.

The UDM stores the fifth information by including it in the subscription information of the first communication device (such as subscription information of UE).

In another embodiment, the subscription information of the second communication device (such as subscription information of UE) is configured on the UDM.

Optionally, the performing, by a fourth communication device, a third operation includes:
performing, by the fourth communication device, the third operation according to information including at least one of the subscription information of the second communication device, the second information, and the third information.

Optionally, the second information further includes at least one of the following:
information used to identify the reader/writer device;
information used to identify the first communication device;
information used to identify the AIoT task; and
information used to identify the second communication device; or
the third information further includes at least one of the following:
   information used to identify the reader/writer device;
   information used to identify the first communication device;
   information used to identify the AIoT task; and
   information used to identify the second communication device.

Optionally, the first request includes at least one of the following:
information used to identify the reader/writer device;
information used to identify the AIoT task; and
information used to identify the second communication device; or
the second request includes at least one of the following:
   information used to identify the reader/writer device;
   information used to identify the AIoT task; and
   information used to identify the second communication device.

In an embodiment, intermediate devices of different reader/writers may be different, and readers/writers connected to different intermediate devices may also be different. It is not difficult to understand that the information used to identify the reader/writer can help determine which reader/writer's intermediate device the intermediate device is.

In an embodiment, execution devices for different AIoT tasks may be different, and AIoT tasks executed by different execution devices may also be different. It is not difficult to understand that the information used to identify the AIoT task can help determine which AIoT task execution device the second communication device is.

In an embodiment, one reader/writer may have multiple intermediate devices, and the second-communication-device identifier may be used to help distinguish different second communication devices.

Optionally, the information used to identify the reader/writer includes: identification information of the reader/writer.

Optionally, the information used to identify the AIoT task includes: identification information of the AIoT task.

Optionally, the information used to identify the second communication device includes: identification information of the second communication device.

Optionally, in a case that the fourth communication device obtains the second request, the second request is used to request to use the second communication device as an intermediate device of the first communication device.

In an embodiment, the first communication device includes a reader/writer device, and the fourth communication device receiving the first request from the first communication device may mean that the first communication device requests the second communication device to operate as an intermediate device of the first communication device. It is not difficult to understand that, in this case, separate information used to identify the reader/writer may not be needed.

In another embodiment, in a case that the fourth communication device receives the first request from the third communication device, where the first request is used to request the second communication device to operate as an intermediate device of the first communication device, it is not difficult to understand that, in a case that the third communication device is different from the first communication device, information used to identify the first communication device (such as the reader/writer) is needed.

In another embodiment, in a case that the fourth communication device obtains the first request, where the first request is used to request the second communication device to operate as an AIoT task execution device, it is not difficult to understand that information used to identify the AIoT task is needed.

In the embodiments of this application, the fourth communication device authorizes or activates the second communication device to operate as at least one of the following devices: a reader/writer device, an intermediate device, a device communicating with an AIoT device, a device executing an AIoT task, an excitation source, and a carrier source; or the fourth communication device sends the first information to the first communication device to indicate that the second communication device operates as at least one of the following devices: a reader/writer device, an intermediate device, a device communicating with an AIoT device, a device executing an AIoT task, an excitation source, and a carrier source, so that the first communication device can perform an activation or authorization operation on the second communication device according to the first information. In this way, the problem in the related art that a RAN device cannot learn of a device executing an AIoT task is solved, which helps to optimize the communication process in the wireless communication network.

### Embodiment 1 of this application

Referring to FIG. 5a, Embodiment 1 of this application includes the following steps:
Step 511. Optionally, UE initiates a registration request or a connection request (such as a service request), or the UE is already in a connected state.
Step 512. An AMF may obtain subscription information of the UE from a UDM, or the UDM sends updated subscription information of the UE to the AMF.

The AMF performs a second operation according to the subscription information of the second communication device, for example,
authorizing the second communication device to operate as a reader/writer or intermediate device, and storing first information.

Optionally, the AMF may store the first information locally (such as in the UE context) or on the UDM.

Step 513. The AMF sends the first information (such as information that the second communication device is authorized to operate as a reader/writer or intermediate device) to an access network device.

The access network device may be a reader/writer corresponding to the intermediate device or a radio access network device currently accessed by the UE.

Step 514. The access network device performs a first operation according to the first information, where the first operation includes at least one of the following:
storing the first information;
performing radio resource control on the second communication device (for example, radio resource configuration (such as configuration of licensed spectrum)); and
activating the second communication device to operate as at least one of the following devices: a reader/writer device, an intermediate device, an excitation source, a carrier source, a device communicating with an AIoT device, and a device executing an AIoT task.

### Embodiment 2 of this application

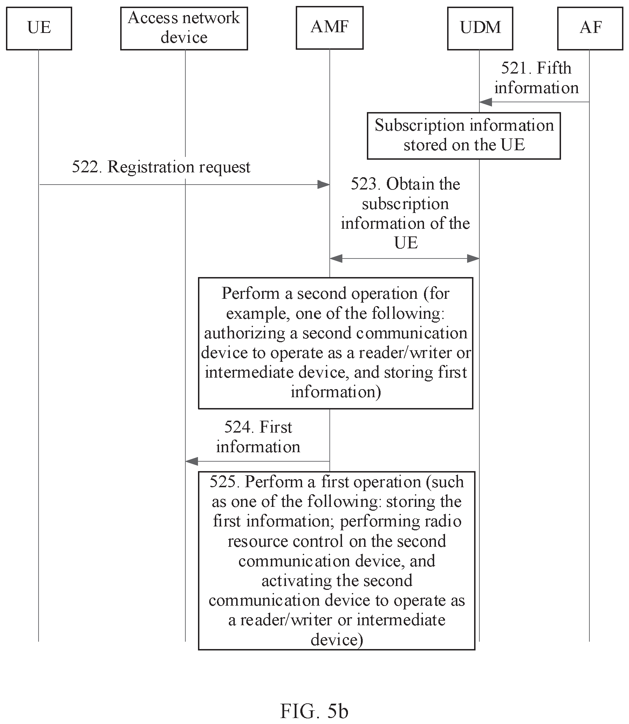

Referring to FIG. 5b, Embodiment 2 of this application includes the following steps:
Step 521. An AF sends fifth information to a UDM, where the fifth information includes information used to indicate at least one of the following:
(1) allowing a first communication device to operate as at least one of the following devices: a reader/writer device, an intermediate device, a device communicating with an AIoT device, a device executing an AIoT task, an excitation source, and a carrier source; and
(2) the first communication device operating as at least one of the following devices: a reader/writer device, an intermediate device, a device communicating with an AIoT device, a device executing an AIoT task, an excitation source, and a carrier source.

The AF may send the fifth information to the UDM through an NEF or directly.

The UDM includes the fifth information in subscription information of the first communication device (such as subscription information of UE) and saves it.

In another embodiment, subscription information of a second communication device (such as subscription information of UE) is configured in the UDM, as shown in Embodiment 1.

The subscription information of the second communication device includes information used to indicate at least one of the following:
(1) allowing the first communication device to operate as at least one of the following devices: a reader/writer device, an intermediate device, a device communicating with an AIoT device, a device executing an AIoT task, an excitation source, and a carrier source; and
(2) the first communication device operating as at least one of the following devices: a reader/writer device, an intermediate device, a device communicating with an AIoT device, a device executing an AIoT task, an excitation source, and a carrier source.

Step 522: Optionally, UE initiates a registration request or a connection request; or the UE is already in a connected state.

Step 523. An AMF may obtain the subscription information of the UE from the UDM, or the UDM sends updated subscription information of the UE to the AMF.

The AMF performs a second operation according to the subscription information of the second communication device (that is, the subscription information of the UE), for example:
authorizing the second communication device to operate as a reader/writer or intermediate device, and storing first information. Optionally, the AMF may store the first information locally (such as in the UE context) or on the UDM.

Step 524. The AMF sends the first information (such as information that the second communication device is authorized to operate as a reader/writer or intermediate device) to an access network device. Optionally, the AMF also sends the first information to the UE.

The access network device may be a reader/writer corresponding to the intermediate device or a radio access network device currently accessed by the UE.

Step 525. The access network device performs a first operation according to the first information, where the first operation includes at least one of the following:
storing the first information;
performing radio resource control on the second communication device (for example, radio resource configuration (such as configuration of licensed spectrum)); and
activating the second communication device to operate as at least one of the following devices: a reader/writer device, an intermediate device, an excitation source, a carrier source, a device communicating with an AIoT device, and a device executing an AIoT task.

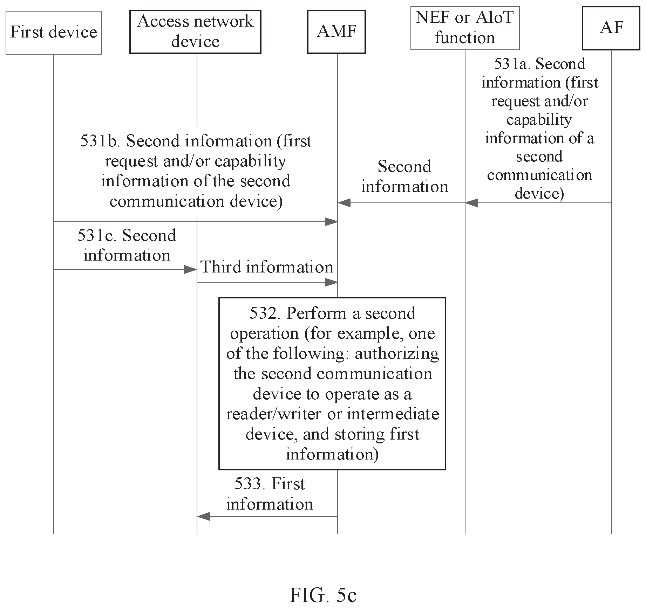

Referring to FIG. 5c, Embodiment 3 of this application includes the following steps:
Step 531 includes at least one of the following Step 51a, Step 51b, and Step 51c:
Step 531a: An AF sends second information to an intermediate node (an NEF, a UDM, a PCF, or an AIoT function), including at least one of the following: a first request, and capability information of a second communication device. The intermediate node forwards the second information to an AMF. In another embodiment, the AF directly sends first information to the AMF.
Step 531b. The second communication device sends the second information to the AMF, including at least one of the following: the first request, and the capability information of the second communication device.

In Steps 531a and 531b, the first request is used to request the second communication device to operate as at least one of the following devices: a reader/writer device, an intermediate device, a device communicating with an AIoT device, a device executing an AIoT task, an excitation source, and a carrier source.

Optionally, the second information further includes at least one of the following:
information used to identify the reader/writer device;
information used to identify the second communication device; and
information used to identify the first communication device; (in combination with the first request which can be used to request the second communication device to operate as an intermediate device of the first communication device).

Step 531c. The second communication device sends the second information to an access network device to request that the second communication device operate as a reader/writer or an intermediate device of the access network device. Further, the access network device sends third information to a core network device. For example, the access network device sends the third information to the AMF.

The third information includes a second request, where the second request is used to request the second communication device to operate as at least one of the following devices: a reader/writer device, an intermediate device, a device communicating with an AIoT device, a device executing an AIoT task, an excitation source, and a carrier source.

The third information further includes at least one of the following: information used to identify the reader/writer device, information used to identify the first communication device, information used to identify the AIoT task, and information used to identify the second communication device.

Step 532. The AMF function performs the second operation according to at least one of the subscription information of the second communication device, the second information, and the third information.

The NEF or AIoT function may obtain the subscription information of the second communication device from the UDM, or the UDM sends updated subscription information of the UE to the NEF or AIoT function.

The second operation, for example, is:
authorizing the second communication device to operate as a reader/writer or intermediate device, and storing first information. Optionally, the AMF may store the first information locally or on the UDM.

The first information is used to indicate at least one of the following:
the second communication device is authorized to operate as at least one of the following devices: a reader/writer device, an intermediate device, a device communicating with an ambient Internet of things AIoT device, a device executing an AIoT task, an excitation source, and a carrier source; and
the second communication device is activated to operate as at least one of the following devices: a reader/writer device, an intermediate device, a device communicating with an AIoT device, a device executing an AIoT task, an excitation source, and a carrier source.

Step 534 of the second communication device: The AMF sends the first information (such as information that the second communication device is authorized to operate as a reader/writer or intermediate device) to the access network device.

The access network device may be a reader/writer corresponding to the intermediate device or the radio access network device currently accessed by the UE.

### Embodiment 4 of this application

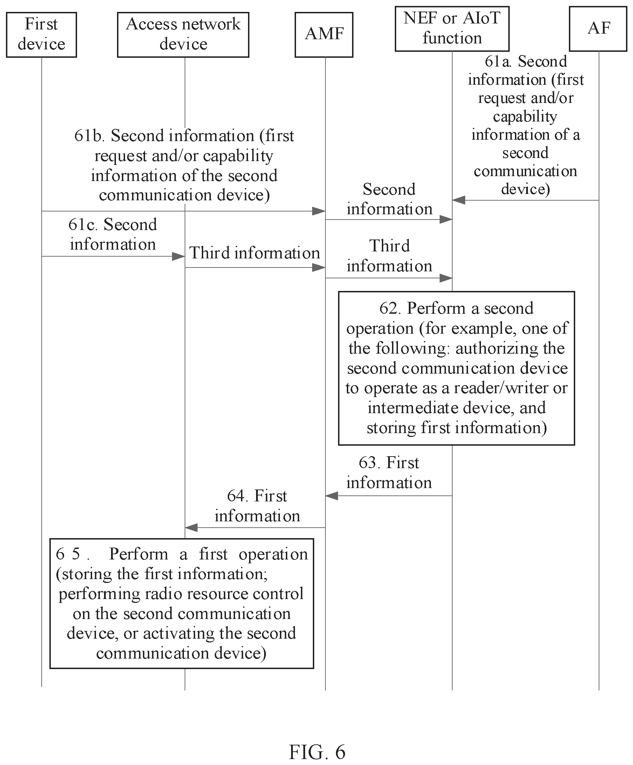

Referring to FIG. 6, Embodiment 4 of this application includes the following steps:
Step 61 includes at least one of the following Step 61a, Step 61b, and Step 61c:
Step 61a: An AF sends second information to an NEF or AIoT function, including at least one of the following: a first request, and capability information of a second communication device.
Step 61b. The second communication device sends second information to an AMF, including at least one of the following: the first request, and the capability information of the second communication device. The AMF forwards the second information to the AIoT function or NEF.

In Steps 61a and 61b, the first request is used to request the second communication device to operate as at least one of the following devices: a reader/writer device, an intermediate device, a device communicating with an AIoT device, a device executing an AIoT task, an excitation source, and a carrier source.

Optionally, the second information further includes at least one of the following:
information used to identify the reader/writer device;
information used to identify the second communication device; and
information used to identify the first communication device; (in combination with the first request which can be used to request the second communication device to operate as an intermediate device of the first communication device).

The first request further includes at least one of the following:
information used to identify the reader/writer device;
information used to identify the AIoT task; and
information used to identify the second communication device.

Step 61c. The second communication device sends the second information to an access network device to request that the second communication device operate as a reader/writer or an intermediate device of the access network device. Further, the access network device sends third information to a core network device. For example, the access network device sends the third information to the AMF, and sends it to the NEF or AIoT function through the AMF.

The third information includes a second request, where the second request is used to request the second communication device to operate as at least one of the following devices: a reader/writer device, an intermediate device, a device communicating with an AIoT device, a device executing an AIoT task, an excitation source, and a carrier source.

The third information further includes at least one of the following: information used to identify the reader/writer device, information used to identify the first communication device, information used to identify the AIoT task, and information used to identify the second communication device.

Step 62. The NEF or AIoT function performs a second operation according to at least one of the subscription information of the second communication device, the second information, and the third information, for example, authorizing the second communication device to operate as a reader/writer or intermediate device, and storing first information. Optionally, the NEF or AIoT function may store the first information locally or on a UDM.

The NEF or AIoT function may obtain the subscription information of the second communication device from the UDM, or the UDM sends updated subscription information of the UE to the NEF or AIoT function.

The first information is used to indicate at least one of the following:
the second communication device is authorized to operate as at least one of the following devices: a reader/writer device, an intermediate device, a device communicating with an ambient Internet of things AIoT device, a device executing an AIoT task, an excitation source, and a carrier source; and
the second communication device is activated to operate as at least one of the following devices: a reader/writer device, an intermediate device, a device communicating with an AIoT device, a device executing an AIoT task, an excitation source, and a carrier source.

Step 63. The NEF or AIoT function sends the first information (such as information that the second communication device is authorized to operate as a reader/writer or intermediate device) to the AMF. In another embodiment, the NEF or AIoT saves the first information to the UDM, and the UDM sends the first information to the AMF.

Step 64. The AMF sends the first information to an access network device.

The access network device may be a reader/writer corresponding to the intermediate device or the radio access network device currently accessed by the UE.

Step 65. The access network device performs a first operation according to the first information, where the first operation includes at least one of the following:
storing the first information;
performing radio resource control on the second communication device (for example, radio resource configuration (such as configuration of licensed spectrum)); and
activating the second communication device to operate as at least one of the following devices: a reader/writer device, an intermediate device, an excitation source, a carrier source, a device communicating with an AIoT device, and a device executing an AIoT task.

### Embodiment 5 of this application

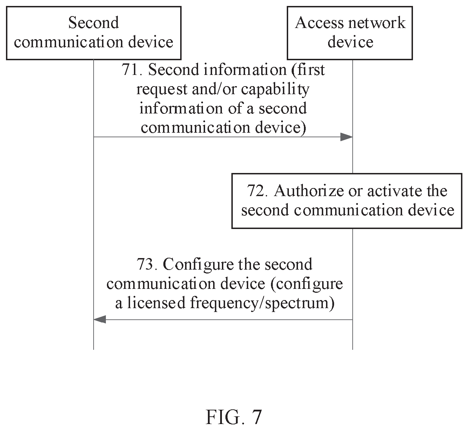

Referring to FIG. 7, Embodiment 5 of this application includes the following steps:
Step 71. A second communication device sends second information to an access network device to request the second communication device to operate as a reader/writer or an intermediate device of the access network device.

The second information includes at least one of the following:
capability information of the second communication device, where the capability information of the second communication device is used to indicate that the second communication device supports operating as at least one of the following devices: a reader/writer device, an intermediate device, a device communicating with an AIoT device, a device executing an AIoT task, an excitation source, and a carrier source; and
a first request, used to request the second communication device to operate as at least one of the following devices: a reader/writer device, an intermediate device, a device communicating with an AIoT device, a device executing an AIoT task, an excitation source, and a carrier source.

Step 72. The access network device performs at least one of the following according to the second information:
authorizing the second communication device to operate as at least one of the following devices: a reader/writer device, an intermediate device, a device communicating with an ambient Internet of things AIoT device, a device executing an AIoT task, an excitation source, and a carrier source;
activating the second communication device to operate as at least one of the following devices: a reader/writer device, an intermediate device, a device communicating with an AIoT device, a device executing an AIoT task, an excitation source, and a carrier source;
determining the first information;
storing the first information; and
performing radio resource control on the second communication device.

The access network device authorizes or activates the second communication device to operate as a reader/writer; and stores related information of the reader/writer, and optionally, may store the related information on the UDM.

Step 73. The access network device configures the second communication device, for example, in a case that the second communication device is used as a reader/writer, configures a licensed spectrum/frequency to be used by the second communication device.

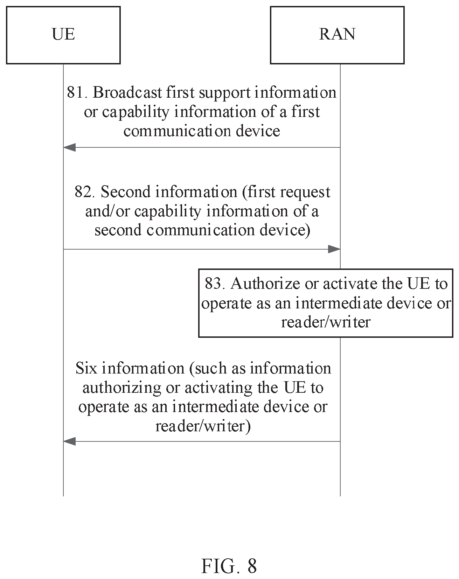

Referring to FIG. 8, Embodiment 6 of this application includes the following steps:
Step 81: A RAN broadcasts first support information or capability information of a first communication device. For example, a system message of the RAN device includes the first support information or the capability information of the first communication device.
Step 82: According to information including the first support information or the capability information of the first communication device, UE sends second information to the RAN, including at least one of the following: a first request, and capability information of the second communication device.
Step 83: According to information including the second information, the RAN authorizes or activates the UE to operate as an intermediate device or reader/writer. The RAN may send sixth information (such as information authorizing or activating the UE to operate as an intermediate device or reader/writer) to the UE.

After receiving the sixth information, the UE may activate itself to operate as an intermediate device or reader/writer.

Referring to FIG. 8, Embodiment 7 of this application includes the following steps:
Step 91: A RAN receives first information of UE.
Step 92: The RAN broadcasts first support information or capability information of a first communication device. For example, a system message of the RAN device includes the first support information or the capability information of the first communication device.
Step 93: According to information including the first support information or the capability information of the first communication device, the UE sends second information to the RAN, including at least one of the following: a first request, and capability information of a second communication device.
Step 94: According to information including the second information and the first information, the RAN activates the UE to operate as an intermediate device or reader/writer.

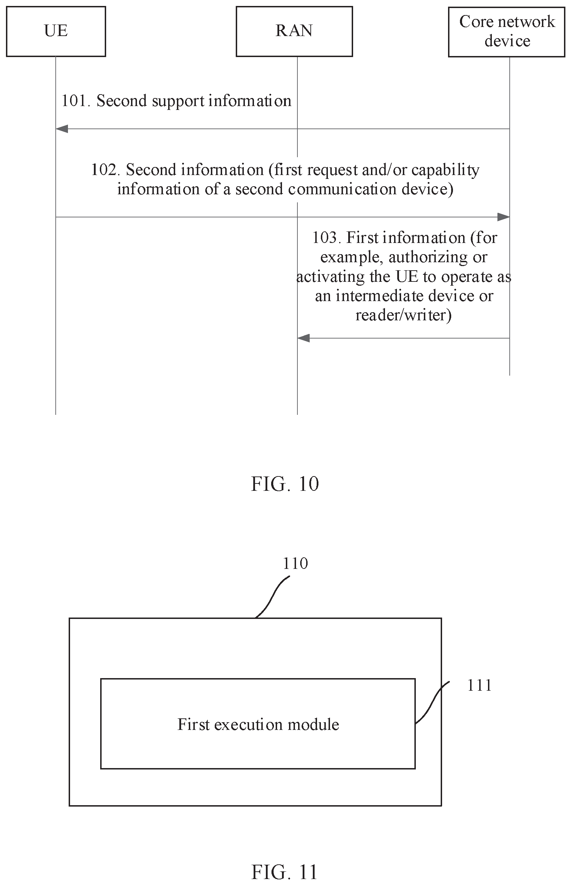

Referring to FIG. 10, Embodiment 4 of this application includes the following steps:
Step 101: A core network device (an AMF, NEF, or AIoT device) sends second support information to UE. The second support information is used to indicate support for one of the following: an AIoT communication service is supported, and intermediate device-based AIoT communication is supported.
Step 102: According to information including the second support information, the UE sends second information to the core network device, including at least one of the following: a first request, and capability information of a second communication device.
Step 103: According to information including the second information, the core network device authorizes or activates the UE to operate as an intermediate device or reader/writer. The core network device sends first information to a RAN device.

The communication method provided by the embodiments of this application may be performed by a communication apparatus. In the embodiments of this application, the communication apparatus provided by the embodiments of this application is described by taking the communication apparatus executing PDU set processing as an example.

Referring to FIG. 11, an embodiment of this application further provides a communication apparatus 110, where the communication apparatus 110 can be applied to a first communication device, including:
a first execution module 111, configured to execute at least one of the following:
authorizing a second communication device to operate as at least one of the following devices: a reader/writer device, an intermediate device, a device communicating with an ambient Internet of things AIoT device, a device executing an AIoT task, an excitation source, and a carrier source;
activating a second communication device to operate as at least one of the following devices: a reader/writer device, an intermediate device, a device communicating with an AIoT device, a device executing an AIoT task, an excitation source, and a carrier source; and
obtaining first information.

The first information is used to indicate at least one of the following:
the second communication device is authorized to operate as at least one of the following devices: a reader/writer device, an intermediate device, a device communicating with an ambient Internet of things AIoT device, a device executing an AIoT task, an excitation source, and a carrier source; and
the second communication device is activated to operate as at least one of the following devices: a reader/writer device, an intermediate device, a device communicating with an AIoT device, a device executing an AIoT task, an excitation source, and a carrier source.

Optionally, the intermediate device includes at least one of the following:
a device that relays or assists in communication between the first communication device and an AIoT device;
a communication device between the first communication device and an AIoT device;
a device that forms a reader/writer together with the first communication device;
a device that extends a coverage area of the first communication device; and
an intermediate device of the first communication device, where the intermediate device of the first communication device is configured to communicate with an AIoT device.

Optionally, the first execution module 111 is further configured to execute at least one of the following:
performing a first operation according to the first information, where the first operation includes at least one of the following:
storing the first information;
performing radio resource control on the second communication device; and
activating the second communication device to operate as at least one of the following devices: a reader/writer device, an intermediate device, an excitation source, a carrier source, a device communicating with an AIoT device, and a device executing an AIoT task.

Optionally, in a case that the first execution module 111 is configured to perform radio resource control on the second communication device, the first execution module 111 is further configured to:
configure a spectrum, a frequency, or a carrier to be used by the second communication device;
perform radio measurement configuration on the second communication device; and
position the second communication device, or configure the second communication device to perform positioning measurement.

Optionally, the first execution module 111 is further configured to:
in a case that a first condition is satisfied, perform the first operation, or activate the second communication device to operate as at least one of the following devices: a reader/writer device, an intermediate device, a device communicating with an AIoT device, a device executing an AIoT task, an excitation source, and a carrier source.

The first condition includes at least one of the following:
the second communication device satisfies at least one of the following: the second communication device is capable of communicating with the first communication device, the second communication device is capable of communicating with an AIoT device, the second communication device satisfies an AIoT task requirement, the second communication device is capable of extending a coverage area of the first communication device, and the second communication device is a terminal accessing the first communication device;
the second communication device supports operating as at least one of the following devices: a reader/writer device, an intermediate device, a device communicating with an AIoT device, a device executing an AIoT task, an excitation source, and a carrier source; and
the second communication device is authorized to operate as at least one of the following devices: a reader/writer device, an intermediate device, a device communicating with an AIoT device, a device executing an AIoT task, an excitation source, and a carrier source.

Optionally, the apparatus is further configured to:
receive the first information sent by at least one of the following devices: a core network device, a terminal, the second communication device, a device having at least one function of access and mobility management, a device having an AIoT function, a device having an NEF function, and a device having an application function.

Optionally, the first execution module 111 is further configured to:
obtain second information; and
perform at least one of the following according to the second information:
   authorizing the second communication device to operate as at least one of the following devices: a reader/writer device, an intermediate device, a device communicating with an ambient Internet of things AIoT device, a device executing an AIoT task, an excitation source, and a carrier source;
   activating the second communication device to operate as at least one of the following devices: a reader/writer device, an intermediate device, a device communicating with an AIoT device, a device executing an AIoT task, an excitation source, and a carrier source;
   determining the first information;
   storing the first information; and
   performing radio resource control on the second communication device.

The second information includes at least one of the following:
capability information of the second communication device, where the capability information of the second communication device is used to indicate that the second communication device supports operating as at least one of the following devices: a reader/writer device, an intermediate device, a device communicating with an AIoT device, a device executing an AIoT task, an excitation source, and a carrier source; and
a first request, where the first request is used to request the second communication device to operate as at least one of the following devices: a reader/writer device, an intermediate device, a device communicating with an AIoT device, a device executing an AIoT task, an excitation source, and a carrier source.

Optionally, the second information further includes at least one of the following:
information used to identify the reader/writer device;
information used to identify the first communication device;
information used to identify the AIoT task; and
information used to identify the second communication device.

Optionally, the first request further includes at least one of the following:
information used to identify the reader/writer device;
information used to identify the AIoT task; and
information used to identify the second communication device.

Optionally, the apparatus further includes a sending module, configured for at least one of the following:
sending third information, where the third information includes a second request; and
sending fourth information, where the fourth information includes at least one of the following: capability information of the first communication device, and first support information;
where the capability information of the first communication device is used to indicate at least one of the following: the first communication device supports operating as a reader/writer, the first communication device supports communicating with an AIoT device through an intermediate device, the first communication device supports providing radio resource control for a reader/writer or an intermediate device, and the first communication device supports providing radio resource control for AIoT communication;
the second request is used to request the second communication device to operate as at least one of the following devices: a reader/writer device, an intermediate device, a device communicating with an AIoT device, a device executing an AIoT task, an excitation source, and a carrier source; and
the first support information is used to indicate at least one of the following: an AIoT service is supported, the first communication device supports operating as a reader/writer, the first communication device supports communicating with an AIoT device through an intermediate device, intermediate device-based AIoT communication is supported, an operation of providing radio resource control for a reader/writer or an intermediate device is supported, and an operation of supporting providing radio resource control for AIoT communication is supported.

Optionally, the third information further includes at least one of the following:
information used to identify the reader/writer device;
information used to identify the first communication device;
information used to identify the AIoT task; and
information used to identify the second communication device.

Optionally, the second request includes at least one of the following:
information used to identify the reader/writer device;
information used to identify the AIoT task; and
information used to identify the second communication device.

Optionally, the sending module is further configured to:
send at least one of the third information and the fourth information in a case that a second condition is satisfied;
where the second condition includes: the second communication device satisfies at least one of the following:
   the second communication device is capable of communicating with the first communication device;
   the second communication device is capable of communicating with an AIoT device;
   the second communication device satisfies an AIoT task requirement; and
   the second communication device is capable of extending a coverage area of the first communication device.

Optionally, the sending module is further configured to:
obtain at least one of a first request, a positioning result of the second communication device, and measurement information of the second communication device;
determine at least one of the third information and the fourth information according to at least one of the first request, the positioning result of the second communication device, and the measurement information of the second communication device; and
send, by the first communication device, at least one of the third information and the fourth information; where
the first request is used to request the second communication device to operate as at least one of the following devices: a reader/writer device, an intermediate device, a device communicating with an AIoT device, a device executing an AIoT task, an excitation source, and a carrier source.

Optionally, the sending module is further configured to:
send, by the first communication device, sixth information to a third communication device or the second communication device;
where the sixth information is used to indicate at least one of the following:
   the second communication device is authorized or activated to operate as at least one of the following devices: a reader/writer device, an intermediate device, a device communicating with an ambient Internet of things AIoT device, a device executing an AIoT task, an excitation source, and a carrier source.

Optionally, the second communication device includes at least one of the following: a terminal, an integrated access and backhaul IAB device, and a relay device.

In the embodiments of this application, the apparatus (such as the first communication device) can authorize or activate the second communication device to operate as at least one of the following devices: a reader/writer device, an intermediate device, a device communicating with an AIoT device, a device executing an AIoT task, an excitation source, and a carrier source, or the second communication device can also learn, based on the obtained first information, that the second communication device is authorized or activated to operate as at least one of the following devices: a reader/writer device, an intermediate device, a device communicating with an AIoT device, a device executing an AIoT task, an excitation source, and a carrier source. In this way, the first communication device can authorize or activate the second communication device to execute an AIoT task or learn that the second communication device can execute an AIoT task, solving the problem in the related art that a RAN device cannot learn of a device executing an AIoT task, which helps to optimize the communication process in the wireless communication network.

The communication apparatus provided by the embodiments of this application can implement various processes achieved by the method embodiment in FIG. 2, with the same technical effects achieved. To avoid repetition, details are not described here.

The communication apparatus in the embodiments of this application may be an electronic device, such as an electronic device with an operating system, or a component in an electronic device, such as an integrated circuit or a chip. The electronic device may be a terminal or another device other than a terminal. For example, the terminal may include but is not limited to the types of the terminal 11 listed above, and the another device may be a server, or a network attached storage (Network Attached Storage, NAS). This is not specifically limited in the embodiments of this application.

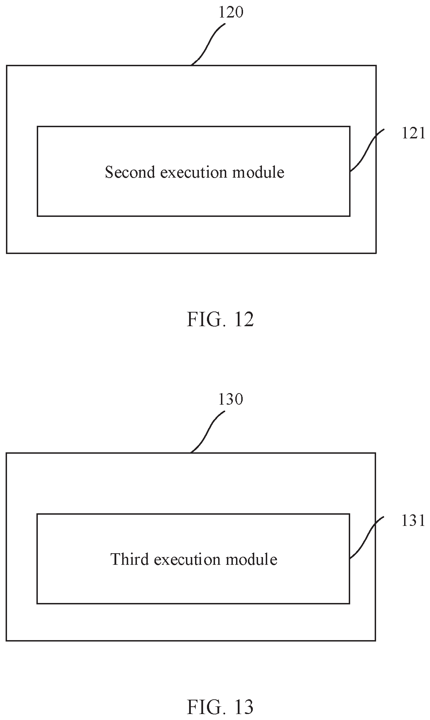

Referring to FIG. 12, an embodiment of this application further provides a communication apparatus 120, where the communication apparatus 120 is applied to a third communication device, and includes:
a second execution module 121, configured to execute a second operation, where the second operation includes at least one of the following:
sending second information; and
receiving at least one of the following: first information, sixth information, first support information, second support information, and capability information of a first communication device.

The second information includes at least one of the following:
capability information of a second communication device, where the capability information of the second communication device is used to indicate that the second communication device supports operating as at least one of the following devices: a reader/writer device, an intermediate device, a device communicating with an AIoT device, a device executing an AIoT task, an excitation source, and a carrier source; and
a first request, where the first request is used to request a second communication device to operate as at least one of the following devices: a reader/writer device, an intermediate device, a device communicating with an AIoT device, a device executing an AIoT task, an excitation source, and a carrier source.

The intermediate device includes at least one of the following:
a device that relays or assists in communication between the first communication device and an AIoT device,
a communication device between the first communication device and an AIoT device,
a device that forms a reader/writer together with the first communication device,
a device that extends a coverage area of the first communication device, and
an intermediate device of the first communication device, where the intermediate device of the first communication device is configured to communicate with an AIoT device.

The first information is used to indicate at least one of the following:
the second communication device is authorized to operate as at least one of the following devices: a reader/writer device, an intermediate device, a device communicating with an ambient Internet of things AIoT device, a device executing an AIoT task, an excitation source, and a carrier source; and
the second communication device is activated to operate as at least one of the following devices: a reader/writer device, an intermediate device, a device communicating with an AIoT device, a device executing an AIoT task, an excitation source, and a carrier source.

The sixth information is used to indicate at least one of the following: the second communication device is authorized or activated to operate as at least one of the following devices: a reader/writer device, an intermediate device, a device communicating with an ambient Internet of things AIoT device, a device executing an AIoT task, an excitation source, and a carrier source;
the capability information of the first communication device is used to indicate at least one of the following: the first communication device supports operating as a reader/writer, the first communication device supports communicating with an AIoT device through an intermediate device, the first communication device supports providing radio resource control for a reader/writer or an intermediate device, and the first communication device supports providing radio resource control for AIoT communication;
the first support information is used to indicate at least one of the following: an AIoT service is supported, the first communication device supports operating as a reader/writer, the first communication device supports communicating with an AIoT device through an intermediate device, intermediate device-based AIoT communication is supported, an operation of providing radio resource control for a reader/writer or an intermediate device is supported, and an operation of supporting providing radio resource control for AIoT communication is supported; and
the second support information is used to indicate at least one of the following: an AIoT communication service is supported, and intermediate device-based AIoT communication is supported.

Optionally, the second information further includes at least one of the following:
information used to identify the reader/writer device;
information used to identify the second communication device;
information used to identify the first communication device; and
information used to identify the AIoT task.

Optionally, the first request further includes at least one of the following:
information used to identify the reader/writer device;
information used to identify the AIoT task; and
information used to identify the second communication device.

Optionally, the second execution module 121 is further configured to:
send the second information according to information including at least one of the first information, the sixth information, the first support information, the second support information, and the capability information of the first communication device.

Optionally, the second execution module 121 is further configured to:
in a case that a third condition is satisfied, send, by the third communication device, the second information;
where the third condition includes at least one of the following:
   the first support information has been obtained, where the first support information is used to indicate at least one of the following: an AIoT service is supported, the first communication device supports operating as a reader/writer, the first communication device supports communicating with an AIoT device through an intermediate device, intermediate device-based AIoT communication is supported, an operation of providing radio resource control for a reader/writer or an intermediate device is supported, and an operation of supporting providing radio resource control for AIoT communication is supported;
   the second support information has been obtained, where the second support information is used to indicate at least one of the following: an AIoT communication service is supported, and intermediate device-based AIoT communication is supported;
   the capability information of the first communication device has been obtained, where the capability information of the first communication device is used to indicate at least one of the following: the first communication device supports operating as a reader/writer, the first communication device supports communicating with an AIoT device through an intermediate device, the first communication device supports providing radio resource control for a reader/writer or an intermediate device, and the first communication device supports providing radio resource control for AIoT communication; and
   the capability information of the second communication device has been obtained, where the capability information of the second communication device is used to indicate that the second communication device supports operating as at least one of the following devices: a reader/writer device, an intermediate device, a device communicating with an AIoT device, a device executing an AIoT task, an excitation source, and a carrier source.

Optionally, the second communication device includes at least one of the following: a terminal, an IAB device, and a relay device.

In the embodiments of this application, the apparatus (such as the third communication device) sends the first information to the first communication device, so that the first communication device can authorize or activate the second communication device to operate as at least one of the following devices: a reader/writer device, an intermediate device, a device communicating with an AIoT device, a device executing an AIoT task, an excitation source, and a carrier source, or the second communication device can also learn, based on the obtained first information, that the second communication device is authorized or activated to operate as at least one of the following devices: a reader/writer device, an intermediate device, a device communicating with an AIoT device, a device executing an AIoT task, an excitation source, and a carrier source. In this way, the second communication device can be authorized or activated to execute an AIoT task, solving the problem in the related art that a RAN device cannot learn of a device executing an AIoT task, which helps to optimize the communication process in the wireless communication network.

The communication apparatus provided by the embodiments of this application can implement various processes achieved by the method embodiment in FIG. 3, with the same technical effects achieved. To avoid repetition, details are not described again herein.

The communication apparatus provided by the embodiments of this application can implement various processes achieved by the method embodiment in FIG. 3, with the same technical effects achieved. To avoid repetition, details are not described again herein.

Referring to FIG. 13, an embodiment of this application further provides a communication apparatus 130, where the communication apparatus 130 is applied to a fourth communication device, including:
a third execution module 131, configured to execute a third operation, where the third operation includes at least one of the following:
authorizing or activating a second communication device to operate as at least one of the following devices: a reader/writer device, an intermediate device, a device communicating with an AIoT device, a device executing an AIoT task, an excitation source, and a carrier source; and
sending first information, where the first information is used to indicate at least one of the following:
   the second communication device is authorized to operate as at least one of the following devices: a reader/writer device, an intermediate device, a device communicating with an AIoT device, a device executing an AIoT task, an excitation source, and a carrier source; and
   the second communication device is activated to operate as at least one of the following devices: a reader/writer device, an intermediate device, a device communicating with an AIoT device, a device executing an AIoT task, an excitation source, and a carrier source.

Optionally, the intermediate device includes at least one of the following:
a device that relays or assists in communication between a first communication device and an AIoT device;
a communication device between a first communication device and an AIoT device;
a device that forms a reader/writer together with a first communication device;
a device that extends a coverage area of a first communication device; and
an intermediate device of a first communication device, where the intermediate device of the first communication device is configured to communicate with an AIoT device.

Optionally, the apparatus further includes:
a second sending module, configured to send second support information, where the second support information is used to indicate support for one of the following: an AIoT communication service is supported, and intermediate device-based AIoT communication is supported.

Optionally, the apparatus further includes:
an obtaining module, configured to obtain at least one of subscription information of the second communication device, second information, and third information.

The subscription information of the second communication device includes information used to indicate at least one of the following:
allowing a first communication device to operate as at least one of the following devices: a reader/writer device, an intermediate device, a device communicating with an AIoT device, a device executing an AIoT task, an excitation source, and a carrier source; and
a first communication device operating as at least one of the following devices: a reader/writer device, an intermediate device, a device communicating with an AIoT device, a device executing an AIoT task, an excitation source, and a carrier source.

The second information includes at least one of the following: capability information of the second communication device, and a first request; where the capability information of the second communication device is used to indicate that the second communication device supports operating as at least one of the following devices: a reader/writer device, an intermediate device, a device communicating with an AIoT device, a device executing an AIoT task, an excitation source, and a carrier source;
the first request is used to request the second communication device to operate as at least one of the following devices: a reader/writer device, an intermediate device, a device communicating with an AIoT device, a device executing an AIoT task, an excitation source, and a carrier source; and
the third information includes a second request, where the second request is used to request the second communication device to operate as at least one of the following devices: a reader/writer device, an intermediate device, a device communicating with an AIoT device, a device executing an AIoT task, an excitation source, and a carrier source.

Optionally, the obtaining module is further configured to:
receive the second information sent by a third communication device; or
receive the third information sent by the first communication device.

Optionally, the third execution module is further configured to:
execute the third operation according to information including at least one of the subscription information of the second communication device, the second information, and the third information.

Optionally, the second information further includes at least one of the following:
information used to identify the reader/writer device;
information used to identify the first communication device;
information used to identify the AIoT task; and
information used to identify the second communication device; or
the third information further includes at least one of the following:
   information used to identify the reader/writer device;
   information used to identify the first communication device;
   information used to identify the AIoT task; and
   information used to identify the second communication device.

Optionally, the first request includes at least one of the following:
information used to identify the reader/writer device;
information used to identify the AIoT task; and
information used to identify the second communication device; or
the second request includes at least one of the following:
   information used to identify the reader/writer device;
   information used to identify the AIoT task; and
   information used to identify the second communication device.

Optionally, the second request is used to request to use the second communication device as an intermediate device of the first communication device.

In the embodiments of this application, the apparatus (such as the fourth communication device) authorizes or activates the second communication device to operate as at least one of the following devices: a reader/writer device, an intermediate device, a device communicating with an AIoT device, a device executing an AIoT task, an excitation source, and a carrier source; or the fourth communication device sends the first information to the first communication device to indicate that the second communication device operates as at least one of the following devices: a reader/writer device, an intermediate device, a device communicating with an AIoT device, a device executing an AIoT task, an excitation source, and a carrier source, so that the first communication device can execute, according to the first information, the operation of activating or authorizing the second communication device. In this way, the problem in the related art that a RAN device cannot learn of a device executing an AIoT task is solved, which helps to optimize the communication process in the wireless communication network.

The communication apparatus provided by the embodiments of this application can implement various processes achieved by the method embodiment in FIG. 4, with the same technical effects achieved. To avoid repetition, details are not described again herein.

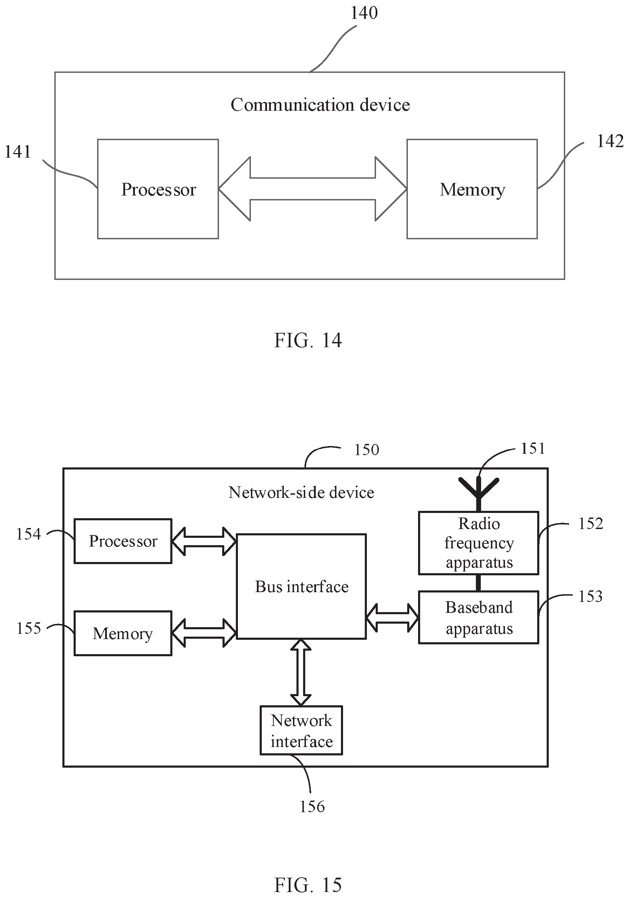

As shown in FIG. 14, an embodiment of this application further provides a communication device 140, including a processor 141 and a memory 142. The memory 142 stores a program or an instruction executable on the processor 141. For example, in a case that the communication device 140 is the first communication device, when the program or instruction is executed by the processor 141, various steps of the communication method embodiment executed by the foregoing first communication device are implemented, with the same technical effects achieved. In a case that the communication device 140 is a third communication device, when the program or instruction is executed by the processor 141, various steps of the communication method embodiment executed by the foregoing third communication device are implemented, with the same technical effects achieved. In a case that the communication device 140 is a fourth communication device, when the program or instruction is executed by the processor 141, various steps of the communication method embodiment executed by the foregoing fourth communication device are implemented, with the same technical effects achieved. To avoid repetition, details are not described again herein.

Specifically, an embodiment of this application further provides a network-side device. As shown in FIG. 15, the network-side device 150 includes: an antenna 151, a radio frequency apparatus 152, a baseband apparatus 153, a processor 154, and a memory 155. The antenna 151 is connected to the radio frequency apparatus 152. In uplink, the radio frequency apparatus 152 receives information through the antenna 151 and sends the received information to the baseband apparatus 153 for processing. In downlink, the baseband apparatus 153 processes information to be sent and sends it to the radio frequency apparatus 152. The radio frequency apparatus 152 processes the received information and then sends it through the antenna 151.

The method executed by the network-side device in the above embodiment can be implemented in the baseband apparatus 153, and the baseband apparatus 153 includes a baseband processor.

The baseband apparatus 153 may, for example, include at least one baseband board, and on the baseband board, multiple chips are provided. As shown in FIG. 15, one of the chips is, for example, a baseband processor, connected to the memory 155 through a bus interface to call a program in the memory 155 and execute the network device operations shown in the above method embodiment.

The network-side device may further include a network interface 156, and the interface is, for example, a common public radio interface (Common Public Radio Interface, CPRI).

Specifically, the network-side device 150 of the embodiments of this application further includes: an instruction or a program stored on the memory 155 and capable of running on the processor 154. The processor 154 calls the instruction or program in the memory 155 to execute the methods executed by various modules shown in FIG. 11 or FIG. 12 or FIG. 13, with the same technical effects achieved. To avoid repetition, details are not described again herein.

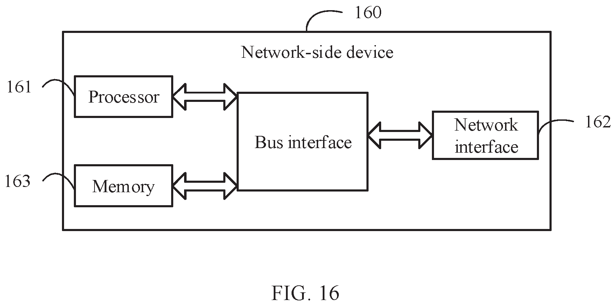

Specifically, an embodiment of this application further provides a network-side device. As shown in FIG. 16, the network-side device 160 includes: a processor 161, a network interface 162, and a memory 163. The network interface 162 is, for example, a common public radio interface (common public radio interface, CPRI).

Specifically, the network-side device 160 of the embodiments of this application further includes: an instruction or a program stored on the memory 163 and capable of running on the processor 161. The processor 161 calls the instruction or program in the memory 163 to execute the methods executed by various modules shown in FIG. 11 or FIG. 12 or FIG. 13, with the same technical effects achieved. To avoid repetition, details are not described again herein.

An embodiment of this application further provides a readable storage medium, and the readable storage medium stores a program or instruction. When the program or instruction is executed by a processor, various processes of the above communication method embodiments can be implemented, with the same technical effects achieved. To avoid repetition, details are not described again herein.

The processor is the processor in the terminal described in the above embodiments. The readable storage medium includes a computer-readable storage medium, such as a computer read-only memory ROM, a random access memory RAM, a magnetic disk, or an optical disc. In some examples, the readable storage medium may be a non-transitory readable storage medium.

An embodiment of this application further provides a chip, and the chip includes a processor and a communication interface. The communication interface and the processor are coupled, and the processor is configured to run a program or an instruction to implement various processes of the above communication method embodiments, with the same technical effects achieved. To avoid repetition, details are not described again herein.

It should be understood that the chip mentioned in the embodiments of this application may also be referred to as a system-level chip, system chip, chip system, system on chip, or the like.

An embodiment of this application further provides a computer program/program product, the computer program/program product is stored in a storage medium, and the computer program/program product is executed by at least one processor to implement various processes of the above communication method embodiments, with the same technical effects achieved. To avoid repetition, details are not described again herein.

An embodiment of this application further provides a wireless communication system, including at least two of the following: a first communication device, a third communication device, and a fourth communication device. The first communication device can be configured to execute the steps of the foregoing method executed on the first communication device side, the third communication device can be configured to execute the steps of the foregoing method executed on the third communication device side, and the fourth communication device can be configured to execute the steps of the foregoing method executed on the fourth communication device side.

An embodiment of this application further provides a wireless communication system, including: a first communication device and a third communication device. The first communication device can be configured to execute the steps of the foregoing method executed on the first communication device side, and the third communication device can be configured to execute the steps of the foregoing method executed on the third communication device side.

An embodiment of this application further provides a wireless communication system, including: a first communication device and a fourth communication device. The first communication device can be configured to execute the steps of the foregoing method executed on the first communication device side, and the fourth communication device can be configured to execute the steps of the foregoing method executed on the fourth communication device side.

An embodiment of this application further provides a wireless communication system, including: a third communication device and a fourth communication device. The third communication device can be configured to execute the steps of the foregoing method executed on the third communication device side, and the fourth communication device can be configured to execute the steps of the foregoing method executed on the fourth communication device side.

It should be noted that, in the specification, the terms "include", "comprise" or any other variant thereof are intended to cover non-exclusive inclusion, so that a process, method, article, or apparatus that includes a series of elements not only includes those elements, but also includes other elements not explicitly listed, or elements inherent to such process, method, article, or apparatus. Without further limitation, an element defined by the statement "including a ..." does not exclude the presence of additional identical elements in the process, method, article, or apparatus that includes the element. In addition, it should be pointed out that the scope of the methods and apparatuses in the embodiments of this application is not limited to performing functions in the order shown or discussed, and may alternatively include performing functions substantially simultaneously or in the reverse order according to the functions involved. For example, the described method may be performed in a different order than described, and various steps may also be added, omitted, or combined. In addition, features described with reference to certain examples may be combined in other examples.

Through the description of the above embodiments, those skilled in the art can clearly understand that the methods of the above embodiments can be implemented by means of a computer software product plus a necessary general hardware platform, and certainly, can alternatively be implemented by hardware. The computer software product is stored in a storage medium (such as a ROM, a RAM, a magnetic disk, or an optical disk) and includes several instructions to make a terminal or network-side device execute the methods described in various embodiments of this application.

The embodiments of this application have been described above in conjunction with the accompanying drawings, but this application is not limited to the foregoing embodiments described above. The foregoing embodiments are merely illustrative rather than restrictive. Those of ordinary skill in the art, under the inspiration of this application, can make many forms of embodiments without departing from the spirit of this application and the scope of the claims, and these embodiments all shall fall under the protection scope of this application.

## Claims

1. A communication method, comprising:
performing, by a first communication device, at least one of the following:
authorizing, by the first communication device, a second communication device to operate as at least one of the following devices: a reader/writer device, an intermediate device, a device communicating with an ambient Internet of things AIoT device, a device executing an AIoT task, an excitation source, and a carrier source;
activating, by the first communication device, the second communication device to operate as at least one of the following devices: a reader/writer device, an intermediate device, a device communicating with an AIoT device, a device executing an AIoT task, an excitation source, and a carrier source; and
obtaining, by the first communication device, first information; wherein
the first information is used to indicate at least one of the following:
the second communication device is authorized to operate as at least one of the following devices: a reader/writer device, an intermediate device, a device communicating with an ambient Internet of things AIoT device, a device executing an AIoT task, an excitation source, and a carrier source; and
the second communication device is activated to operate as at least one of the following devices: a reader/writer device, an intermediate device, a device communicating with an AIoT device, a device executing an AIoT task, an excitation source, and a carrier source.

2. The method according to claim 1, wherein the intermediate device comprises at least one of the following:
a device that relays or assists in communication between the first communication device and an AIoT device;
a communication device between the first communication device and an AIoT device;
a device that forms a reader/writer together with the first communication device;
a device that extends a coverage area of the first communication device; and
an intermediate device of the first communication device, wherein the intermediate device of the first communication device is configured to communicate with an AIoT device.

3. The method according to claim 1, further comprising:
performing, by the first communication device, a first operation according to the first information, wherein the first operation comprises at least one of the following:
storing the first information;
performing radio resource control on the second communication device; and
activating the second communication device to operate as at least one of the following devices: a reader/writer device, an intermediate device, an excitation source, a carrier source, a device communicating with an AIoT device, and a device executing an AIoT task.

4. The method according to claim 3, wherein the performing radio resource control on the second communication device comprises at least one of the following:
configuring a spectrum, a frequency, or a carrier to be used by the second communication device;
performing a radio measurement configuration on the second communication device; and
positioning the second communication device, or configuring the second communication device to perform positioning measurement.

5. The method according to claim 3, wherein the performing a first operation, or the activating the second communication device to operate as at least one of the following devices: a reader/writer device, an intermediate device, a device communicating with an AIoT device, a device executing an AIoT task, an excitation source, and a carrier source comprises:
in a case that a first condition is satisfied, performing the first operation, or activating the second communication device to operate as at least one of the following devices: a reader/writer device, an intermediate device, a device communicating with an AIoT device, a device executing an AIoT task, an excitation source, and a carrier source;
wherein the first condition comprises at least one of the following:
the second communication device satisfies at least one of the following: the second communication device is capable of communicating with the first communication device, the second communication device is capable of communicating with an AIoT device, the second communication device satisfies an AIoT task requirement, the second communication device is capable of extending a coverage area of the first communication device, and the second communication device is a terminal accessing the first communication device;
the second communication device supports operating as at least one of the following devices: a reader/writer device, an intermediate device, a device communicating with an AIoT device, a device executing an AIoT task, an excitation source, and a carrier source; and
the second communication device is authorized to operate as at least one of the following devices: a reader/writer device, an intermediate device, a device communicating with an AIoT device, a device executing an AIoT task, an excitation source, and a carrier source.

6. The method according to any one of claims 1 to 5, wherein the obtaining, by the first communication device, first information comprises:
receiving, by the first communication device, the first information sent by at least one of the following devices: a core network device, a terminal, the second communication device, a device having at least one function of access and mobility management, a device having an AIoT function, a device having an NEF function, and a device having an application function.

7. The method according to any one of claims 1 to 6, further comprising:
obtaining, by the first communication device, second information; and
performing, by the first communication device, at least one of the following according to the second information:
authorizing the second communication device to operate as at least one of the following devices: a reader/writer device, an intermediate device, a device communicating with an ambient Internet of things AIoT device, a device executing an AIoT task, an excitation source, and a carrier source;
activating the second communication device to operate as at least one of the following devices: a reader/writer device, an intermediate device, a device communicating with an AIoT device, a device executing an AIoT task, an excitation source, and a carrier source;
determining the first information;
storing the first information; and
performing radio resource control on the second communication device;
wherein the second information comprises at least one of the following:
capability information of the second communication device, wherein the capability information of the second communication device is used to indicate that the second communication device supports operating as at least one of the following devices: a reader/writer device, an intermediate device, a device communicating with an AIoT device, a device executing an AIoT task, an excitation source, and a carrier source; and
a first request, wherein the first request is used to request the second communication device to operate as at least one of the following devices: a reader/writer device, an intermediate device, a device communicating with an AIoT device, a device executing an AIoT task, an excitation source, and a carrier source.

8. The method according to claim 7, wherein the second information further comprises at least one of the following:
information used to identify the reader/writer device;
information used to identify the first communication device;
information used to identify the AIoT task; and
information used to identify the second communication device.

9. The method according to claim 7, wherein the first request further comprises at least one of the following:
information used to identify the reader/writer device;
information used to identify the AIoT task; and
information used to identify the second communication device.

10. The method according to any one of claims 1 to 9, before the obtaining, by the first communication device, first information, the method further comprises at least one of the following:
sending, by the first communication device, third information, wherein the third information comprises a second request; and
sending, by the first communication device, fourth information, wherein the fourth information comprises at least one of the following: capability information of the first communication device, and first support information;
wherein the capability information of the first communication device is used to indicate at least one of the following: the first communication device supports operating as a reader/writer, the first communication device supports communicating with an AIoT device through an intermediate device, the first communication device supports providing radio resource control for a reader/writer or an intermediate device, and the first communication device supports providing radio resource control for AIoT communication;
the second request is used to request the second communication device to operate as at least one of the following devices: a reader/writer device, an intermediate device, a device communicating with an AIoT device, a device executing an AIoT task, an excitation source, and a carrier source; and
the first support information is used to indicate at least one of the following: an AIoT service is supported, the first communication device supports operating as a reader/writer, the first communication device supports communicating with an AIoT device through an intermediate device, intermediate device-based AIoT communication is supported, an operation of providing radio resource control for a reader/writer or an intermediate device is supported, and an operation of supporting providing radio resource control for AIoT communication is supported.

11. The method according to claim 10, wherein the third information further comprises at least one of the following:
information used to identify the reader/writer device;
information used to identify the first communication device;
information used to identify the AIoT task; and
information used to identify the second communication device.

12. The method according to claim 10, wherein the second request comprises at least one of the following:
information used to identify the reader/writer device;
information used to identify the AIoT task; and
information used to identify the second communication device.

13. The method according to claim 10, wherein the sending, by the first communication device, at least one of third information and fourth information comprises:
in a case that a second condition is satisfied, sending, by the first communication device, at least one of the third information and the fourth information;
wherein the second condition comprises: the second communication device satisfies at least one of the following:
the second communication device is capable of communicating with the first communication device;
the second communication device is capable of communicating with an AIoT device;
the second communication device satisfies an AIoT task requirement; and
the second communication device is capable of extending a coverage area of the first communication device.

14. The method according to claim 10, wherein the sending, by the first communication device, at least one of third information and fourth information comprises:
obtaining, by the first communication device, at least one of a first request, a positioning result of the second communication device, and measurement information of the second communication device;
determining, by the first communication device, at least one of the third information and the fourth information according to at least one of the first request, the positioning result of the second communication device, and the measurement information of the second communication device; and
sending, by the first communication device, at least one of the third information and the fourth information; wherein
the first request is used to request the second communication device to operate as at least one of the following devices: a reader/writer device, an intermediate device, a device communicating with an AIoT device, a device executing an AIoT task, an excitation source, and a carrier source.

15. The method according to any one of claims 1 to 14, further comprising:
sending, by the first communication device, sixth information to a third communication device or the second communication device;
wherein the sixth information is used to indicate at least one of the following:
the second communication device is authorized or activated to operate as at least one of the following devices: a reader/writer device, an intermediate device, a device communicating with an ambient Internet of things AIoT device, a device executing an AIoT task, an excitation source, and a carrier source.

16. The method according to any one of claims 1 to 14, wherein the second communication device comprises at least one of the following: a terminal, an integrated access backhaul IAB device, and a relay device.

17. A communication method, comprising:
performing, by a third communication device, a second operation, wherein the second operation comprises at least one of the following:
sending second information; and
receiving at least one of the following: first information, sixth information, first support information, second support information, and capability information of a first communication device; wherein
the second information comprises at least one of the following:
capability information of a second communication device, wherein the capability information of the second communication device is used to indicate that the second communication device supports operating as at least one of the following devices: a reader/writer device, an intermediate device, a device communicating with an AIoT device, a device executing an AIoT task, an excitation source, and a carrier source; and
a first request, wherein the first request is used to request the second communication device to operate as at least one of the following devices: a reader/writer device, an intermediate device, a device communicating with an AIoT device, a device executing an AIoT task, an excitation source, and a carrier source;
the first information is used to indicate at least one of the following:
the second communication device is authorized to operate as at least one of the following devices: a reader/writer device, an intermediate device, a device communicating with an ambient Internet of things AIoT device, a device executing an AIoT task, an excitation source, and a carrier source; and
the second communication device is activated to operate as at least one of the following devices: a reader/writer device, an intermediate device, a device communicating with an AIoT device, a device executing an AIoT task, an excitation source, and a carrier source;
the sixth information is used to indicate at least one of the following: the second communication device is authorized or activated to operate as at least one of the following devices: a reader/writer device, an intermediate device, a device communicating with an ambient Internet of things AIoT device, a device executing an AIoT task, an excitation source, and a carrier source;
the capability information of the first communication device is used to indicate at least one of the following: the first communication device supports operating as a reader/writer, the first communication device supports communicating with an AIoT device through an intermediate device, the first communication device supports providing radio resource control for a reader/writer or an intermediate device, and the first communication device supports providing radio resource control for AIoT communication;
the first support information is used to indicate at least one of the following: an AIoT service is supported, the first communication device supports operating as a reader/writer, the first communication device supports communicating with an AIoT device through an intermediate device, intermediate device-based AIoT communication is supported, an operation of providing radio resource control for a reader/writer or an intermediate device is supported, and an operation of supporting providing radio resource control for AIoT communication is supported; and
the second support information is used to indicate at least one of the following: an AIoT communication service is supported, and intermediate device-based AIoT communication is supported.

18. The method according to claim 17, wherein the second information further comprises at least one of the following:
information used to identify the reader/writer device;
information used to identify the second communication device;
information used to identify the first communication device; and
information used to identify the AIoT task.

19. The method according to claim 17, wherein the first request further comprises at least one of the following:
information used to identify the reader/writer device;
information used to identify the AIoT task; and
information used to identify the second communication device.

20. The method according to claim 17, wherein the sending, by a third communication device, second information comprises:
sending, by the third communication device, the second information according to information comprising at least one of the first information, the sixth information, the first support information, the second support information, and the capability information of the first communication device.

21. The method according to claim 17, wherein the sending, by a third communication device, second information comprises:
in a case that a third condition is satisfied, sending, by the third communication device, the second information;
wherein the third condition comprises at least one of the following:
the first support information has been obtained, wherein the first support information is used to indicate at least one of the following: an AIoT service is supported, the first communication device supports operating as a reader/writer, the first communication device supports communicating with an AIoT device through an intermediate device, intermediate device-based AIoT communication is supported, an operation of providing radio resource control for a reader/writer or an intermediate device is supported, and an operation of supporting providing radio resource control for AIoT communication is supported;
the second support information has been obtained, wherein the second support information is used to indicate at least one of the following: an AIoT communication service is supported, and intermediate device-based AIoT communication is supported;
the capability information of the first communication device has been obtained, wherein the capability information of the first communication device is used to indicate at least one of the following: the first communication device supports operating as a reader/writer, the first communication device supports communicating with an AIoT device through an intermediate device, the first communication device supports providing radio resource control for a reader/writer or an intermediate device, and the first communication device supports providing radio resource control for AIoT communication; and
the capability information of the second communication device has been obtained, wherein the capability information of the second communication device is used to indicate that the second communication device supports operating as at least one of the following devices: a reader/writer device, an intermediate device, a device communicating with an AIoT device, a device executing an AIoT task, an excitation source, and a carrier source.

22. The method according to any one of claims 17 to 21, wherein the second communication device comprises at least one of the following: a terminal, an IAB device, and a relay device.

23. The method according to any one of claims 17 to 21, wherein the sending, by a third communication device, second information comprises: sending, by the third communication device, the second information to at least one of the following: the first communication device, a fourth communication device, an access network device, and a core network device.

24. A communication method, comprising:
performing, by a fourth communication device, a third operation, wherein the third operation comprises at least one of the following:
authorizing or activating a second communication device to operate as at least one of the following devices: a reader/writer device, an intermediate device, a device communicating with an AIoT device, a device executing an AIoT task, an excitation source, and a carrier source; and
sending first information, wherein the first information is used to indicate at least one of the following:
the second communication device is authorized to operate as at least one of the following devices: a reader/writer device, an intermediate device, a device communicating with an AIoT device, a device executing an AIoT task, an excitation source, and a carrier source; and
the second communication device is activated to operate as at least one of the following devices: a reader/writer device, an intermediate device, a device communicating with an AIoT device, a device executing an AIoT task, an excitation source, and a carrier source.

25. The method according to claim 24, wherein the intermediate device comprises at least one of the following:
a device that relays or assists in communication between a first communication device and an AIoT device;
a communication device between a first communication device and an AIoT device;
a device that forms a reader/writer together with a first communication device;
a device that extends a coverage area of a first communication device; and
an intermediate device of a first communication device, wherein the intermediate device of the first communication device is configured to communicate with an AIoT device.

26. The method according to claim 24, wherein before the performing, by a fourth communication device, a third operation, the method further comprises:
sending, by the fourth communication device, second support information, wherein the second support information is used to indicate at least one of the following: an AIoT communication service is supported, and intermediate device-based AIoT communication is supported.

27. The method according to claim 24, wherein before the performing, by a fourth communication device, a third operation, the method further comprises:
obtaining, by the fourth communication device, at least one of subscription information of the second communication device, second information, and third information; wherein
the subscription information of the second communication device comprises information used to indicate at least one of the following:
allowing a first communication device to operate as at least one of the following devices: a reader/writer device, an intermediate device, a device communicating with an AIoT device, a device executing an AIoT task, an excitation source, and a carrier source; and
a first communication device operating as at least one of the following devices: a reader/writer device, an intermediate device, a device communicating with an AIoT device, a device executing an AIoT task, an excitation source, and a carrier source;
the second information comprises at least one of the following: capability information of the second communication device, and a first request; wherein the capability information of the second communication device is used to indicate that the second communication device supports operating as at least one of the following devices: a reader/writer device, an intermediate device, a device communicating with an AIoT device, a device executing an AIoT task, an excitation source, and a carrier source;
the first request is used to request the second communication device to operate as at least one of the following devices: a reader/writer device, an intermediate device, a device communicating with an AIoT device, a device executing an AIoT task, an excitation source, and a carrier source; and
the third information comprises a second request, wherein the second request is used to request the second communication device to operate as at least one of the following devices: a reader/writer device, an intermediate device, a device communicating with an AIoT device, a device executing an AIoT task, an excitation source, and a carrier source.

28. The method according to claim 27, wherein
the obtaining, by the fourth communication device, second information comprises: receiving, by the fourth communication device, the second information sent by a third communication device; or
the obtaining, by the fourth communication device, third information comprises: receiving, by the fourth communication device, the third information sent by the first communication device.

29. The method according to claim 27, wherein the performing, by a fourth communication device, a third operation comprises:
performing, by the fourth communication device, the third operation according to information comprising at least one of the subscription information of the second communication device, the second information, and the third information.

30. The method according to claim 27 or 29, wherein the second information further comprises at least one of the following:
information used to identify the reader/writer device;
information used to identify the first communication device;
information used to identify the AIoT task; and
information used to identify the second communication device; or
the third information further comprises at least one of the following:
information used to identify the reader/writer device;
information used to identify the first communication device;
information used to identify the AIoT task; and
information used to identify the second communication device.

31. The method according to claim 27, wherein
the first request comprises at least one of the following:
information used to identify the reader/writer device;
information used to identify the AIoT task; and
information used to identify the second communication device; or
the second request comprises at least one of the following:
information used to identify the reader/writer device;
information used to identify the AIoT task; and
information used to identify the second communication device.

32. The method according to claim 27, wherein in a case that the fourth communication device obtains the second request, the second request is used to request to use the second communication device as an intermediate device of the first communication device.

33. A communication apparatus, wherein the apparatus comprises:
a first execution module, configured to execute at least one of the following:
authorizing, by a first communication device, a second communication device to operate as at least one of the following devices: a reader/writer device, an intermediate device, a device communicating with an ambient Internet of things AIoT device, a device executing an AIoT task, an excitation source, and a carrier source;
activating, by the first communication device, a second communication device to operate as at least one of the following devices: a reader/writer device, an intermediate device, a device communicating with an AIoT device, a device executing an AIoT task, an excitation source, and a carrier source; and
obtaining, by the first communication device, first information; wherein
the first information is used to indicate at least one of the following:
the second communication device is authorized to operate as at least one of the following devices: a reader/writer device, an intermediate device, a device communicating with an ambient Internet of things AIoT device, a device executing an AIoT task, an excitation source, and a carrier source; and
the second communication device is activated to operate as at least one of the following devices: a reader/writer device, an intermediate device, a device communicating with an AIoT device, a device executing an AIoT task, an excitation source, and a carrier source.

34. The apparatus according to claim 33, wherein the first execution module is further configured to execute at least one of the following:
performing a first operation according to the first information, wherein the first operation comprises at least one of the following:
storing the first information;
performing radio resource control on the second communication device; and
activating the second communication device to operate as at least one of the following devices: a reader/writer device, an intermediate device, an excitation source, a carrier source, a device communicating with an AIoT device, and a device executing an AIoT task.

35. The apparatus according to claim 33, wherein in a case that the first execution module is configured to perform radio resource control on the second communication device, the first execution module is further configured to:
configure a spectrum, a frequency, or a carrier to be used by the second communication device;
perform radio measurement configuration on the second communication device; and
position the second communication device, or configure the second communication device to perform positioning measurement.

36. The apparatus according to claim 33, wherein the first execution module is further configured to:
in a case that a first condition is satisfied, perform the first operation, or activate the second communication device to operate as at least one of the following devices: a reader/writer device, an intermediate device, a device communicating with an AIoT device, a device executing an AIoT task, an excitation source, and a carrier source;
wherein the first condition comprises at least one of the following:
the second communication device satisfies at least one of the following: the second communication device is capable of communicating with the first communication device, the second communication device is capable of communicating with an AIoT device, the second communication device satisfies an AIoT task requirement, the second communication device is capable of extending a coverage area of the first communication device, and the second communication device is a terminal accessing the first communication device;
the second communication device supports operating as at least one of the following devices: a reader/writer device, an intermediate device, a device communicating with an AIoT device, a device executing an AIoT task, an excitation source, and a carrier source; and
the second communication device is authorized to operate as at least one of the following devices: a reader/writer device, an intermediate device, a device communicating with an AIoT device, a device executing an AIoT task, an excitation source, and a carrier source.

37. The apparatus according to any one of claims 33 to 36, wherein the first execution module is further configured to:
obtain second information; and
perform at least one of the following according to the second information:
authorizing the second communication device to operate as at least one of the following devices: a reader/writer device, an intermediate device, a device communicating with an ambient Internet of things AIoT device, a device executing an AIoT task, an excitation source, and a carrier source;
activating the second communication device to operate as at least one of the following devices: a reader/writer device, an intermediate device, a device communicating with an AIoT device, a device executing an AIoT task, an excitation source, and a carrier source;
determining the first information;
storing the first information; and
performing radio resource control on the second communication device;
wherein the second information comprises at least one of the following:
capability information of the second communication device, wherein the capability information of the second communication device is used to indicate that the second communication device supports operating as at least one of the following devices: a reader/writer device, an intermediate device, a device communicating with an AIoT device, a device executing an AIoT task, an excitation source, and a carrier source; and
a first request, wherein the first request is used to request the second communication device to operate as at least one of the following devices: a reader/writer device, an intermediate device, a device communicating with an AIoT device, a device executing an AIoT task, an excitation source, and a carrier source.

38. A communication apparatus, wherein the apparatus comprises:
a second execution module, configured to execute a second operation, wherein the second operation comprises at least one of the following:
sending second information; and
receiving at least one of the following: first information, sixth information, first support information, second support information, and capability information of a first communication device; wherein
the second information comprises at least one of the following:
capability information of a second communication device, wherein the capability information of the second communication device is used to indicate that the second communication device supports operating as at least one of the following devices: a reader/writer device, an intermediate device, a device communicating with an AIoT device, a device executing an AIoT task, an excitation source, and a carrier source; and
a first request, wherein the first request is used to request a second communication device to operate as at least one of the following devices: a reader/writer device, an intermediate device, a device communicating with an AIoT device, a device executing an AIoT task, an excitation source, and a carrier source;
wherein the intermediate device comprises at least one of the following: a device that relays or assists in communication between the first communication device and an AIoT device, a communication device between the first communication device and an AIoT device, a device that extends a coverage area of the first communication device, and a device that extends the coverage area of the first communication device;
the first information is used to indicate at least one of the following:
the second communication device is authorized to operate as at least one of the following devices: a reader/writer device, an intermediate device, a device communicating with an ambient Internet of things AIoT device, a device executing an AIoT task, an excitation source, and a carrier source; and
the second communication device is activated to operate as at least one of the following devices: a reader/writer device, an intermediate device, a device communicating with an AIoT device, a device executing an AIoT task, an excitation source, and a carrier source;
the sixth information is used to indicate at least one of the following: the second communication device is authorized or activated to operate as at least one of the following devices: a reader/writer device, an intermediate device, a device communicating with an ambient Internet of things AIoT device, a device executing an AIoT task, an excitation source, and a carrier source;
the capability information of the first communication device is used to indicate at least one of the following: the first communication device supports operating as a reader/writer, the first communication device supports communicating with an AIoT device through an intermediate device, the first communication device supports providing radio resource control for a reader/writer or an intermediate device, and the first communication device supports providing radio resource control for AIoT communication;
the first support information is used to indicate at least one of the following: an AIoT service is supported, the first communication device supports operating as a reader/writer, the first communication device supports communicating with an AIoT device through an intermediate device, intermediate device-based AIoT communication is supported, an operation of providing radio resource control for a reader/writer or an intermediate device is supported, and an operation of supporting providing radio resource control for AIoT communication is supported; and
the second support information is used to indicate at least one of the following: an AIoT communication service is supported, and intermediate device-based AIoT communication is supported.

39. The apparatus according to claim 38, wherein the second execution module is further configured to:
send the second information according to information comprising at least one of the first information, the sixth information, the first support information, the second support information, and the capability information of the first communication device.

40. The apparatus according to claim 38, wherein the second execution module is further configured to:
send, by a third communication device, the second information in a case that a third condition is satisfied;
wherein the third condition comprises at least one of the following:
the first support information has been obtained, wherein the first support information is used to indicate at least one of the following: an AIoT service is supported, the first communication device supports operating as a reader/writer, the first communication device supports communicating with an AIoT device through an intermediate device, intermediate device-based AIoT communication is supported, an operation of providing radio resource control for a reader/writer or an intermediate device is supported, and an operation of supporting providing radio resource control for AIoT communication is supported;
the second support information has been obtained, wherein the second support information is used to indicate at least one of the following: an AIoT communication service is supported, and intermediate device-based AIoT communication is supported;
the capability information of the first communication device has been obtained, wherein the capability information of the first communication device is used to indicate at least one of the following: the first communication device supports operating as a reader/writer, the first communication device supports communicating with an AIoT device through an intermediate device, the first communication device supports providing radio resource control for a reader/writer or an intermediate device, and the first communication device supports providing radio resource control for AIoT communication; and
the capability information of the second communication device has been obtained, wherein the capability information of the second communication device is used to indicate that the second communication device supports operating as at least one of the following devices: a reader/writer device, an intermediate device, a device communicating with an AIoT device, a device executing an AIoT task, an excitation source, and a carrier source.

41. A communication apparatus, wherein the apparatus comprises:
a third execution module, configured to execute a third operation, wherein the third operation comprises at least one of the following:
authorizing or activating a second communication device to operate as at least one of the following devices: a reader/writer device, an intermediate device, a device communicating with an AIoT device, a device executing an AIoT task, an excitation source, and a carrier source; and
sending first information, wherein the first information is used to indicate at least one of the following:
the second communication device is authorized to operate as at least one of the following devices: a reader/writer device, an intermediate device, a device communicating with an AIoT device, a device executing an AIoT task, an excitation source, and a carrier source; and
the second communication device is activated to operate as at least one of the following devices: a reader/writer device, an intermediate device, a device communicating with an AIoT device, a device executing an AIoT task, an excitation source, and a carrier source.

42. The apparatus according to claim 41, further comprising:
a second sending module, configured to send second support information, wherein the second support information is used to indicate support for one of the following: an AIoT communication service is supported, and intermediate device-based AIoT communication is supported.

43. The apparatus according to claim 41, further comprising:
an obtaining module, configured to obtain at least one of subscription information of the second communication device, second information, and third information; wherein
the subscription information of the second communication device comprises information used to indicate at least one of the following:
allowing a first communication device to operate as at least one of the following devices: a reader/writer device, an intermediate device, a device communicating with an AIoT device, a device executing an AIoT task, an excitation source, and a carrier source; and
a first communication device operating as at least one of the following devices: a reader/writer device, an intermediate device, a device communicating with an AIoT device, a device executing an AIoT task, an excitation source, and a carrier source; wherein
the second information comprises at least one of the following: capability information of the second communication device, and a first request; wherein the capability information of the second communication device is used to indicate that the second communication device supports operating as at least one of the following devices: a reader/writer device, an intermediate device, a device communicating with an AIoT device, a device executing an AIoT task, an excitation source, and a carrier source;
the first request is used to request the second communication device to operate as at least one of the following devices: a reader/writer device, an intermediate device, a device communicating with an AIoT device, a device executing an AIoT task, an excitation source, and a carrier source; and
the third information comprises a second request, wherein the second request is used to request the second communication device to operate as at least one of the following devices: a reader/writer device, an intermediate device, a device communicating with an AIoT device, a device executing an AIoT task, an excitation source, and a carrier source.

44. The apparatus according to claim 43, wherein the third execution module is further configured to:
execute the third operation according to information comprising at least one of the subscription information of the second communication device, the second information, and the third information.

45. A communication device, comprising a processor and a memory, wherein the memory stores a program or an instruction executable on the processor, and when the program or the instruction is executed by the processor, the steps of the communication method according to any one of claims 1 to 16 are implemented, or when the program or the instruction is executed by the processor, the steps of the communication method according to any one of claims 17 to 23 are implemented, or when the program or the instruction is executed by the processor, the steps of the communication method according to any one of claims 24 to 32 are implemented.

46. A readable storage medium, wherein the readable storage medium stores a program or an instruction, and when the program or the instruction is executed by a processor, the communication method according to any one of claims 1 to 16 is implemented, or the steps of the communication method according to any one of claims 17 to 23 are implemented, or the steps of the communication method according to any one of claims 24 to 32 are implemented.
